# EUROPÄISCHE PATENTSCHRIFT

(11) **EP 3 528 985 B1**
(45) Veröffentlichungstag und Bekanntmachung des Hinweises auf die Patenterteilung: **07.12.2022**
(21) Anmeldenummer: 17778275.2
(22) Anmeldetag: 04.10.2017
(51) Int. Cl.: B23B 31/18, B23B 31/14, B24B 23/02, B24B 45/00

(54) **SCHNELLSPANNVORRICHTUNG FÜR EINE ZUMINDEST EINE ROTIEREND ANTREIBBARE ABTRIEBSWELLE AUFWEISENDE TRAGBARE WERKZEUGMASCHINE, INSBESONDERE WINKELSCHLEIFMASCHINE**
QUICK CLAMPING DEVICE FOR A PORTABLE POWER TOOL HAVING AT LEAST ONE ROTATABLY DRIVABLE OUTPUT SHAFT, IN PARTICULAR AN ANGLE GRINDER
DISPOSITIF DE FIXATION RAPIDE POUR MACHINE-OUTIL PORTATIVE, EN PARTICULIER UNE MEULEUSE D'ANGLE, DOTÉE D'AU MOINS ARBRE DE SORTIE SUSCEPTIBLE D'ÊTRE ENTRAÎNÉ EN ROTATION

(30) Priorität: 18.10.2016 DE 102016220343
(43) Veröffentlichungstag der Anmeldung: 28.08.2019
(73) Patentinhaber: Robert Bosch GmbH, 70442 Stuttgart (DE)
(72) Erfinder: LUESCHER, Bruno, 4800 Zofingen (CH); ZURBRUEGG, Andreas, 4573 Lohn-Ammansegg (CH)
(86) Internationale Anmeldenummer: PCT/EP2017/075106
(87) Internationale Veröffentlichungsnummer: WO 2018/072995

(56) Entgegenhaltungen:
- EP-A1- 1 790 434
- EP-A2- 0 319 813

## Beschreibung

### Stand der Technik

Aus DE 100 17 458 A1 ist bereits eine Schnellspannvorrichtung für eine zumindest eine rotierend antreibbare Abtriebswelle aufweisende tragbare Werkzeugmaschine, insbesondere Winkelschleifmaschine, mit zumindest einer Spanneinheit, die zu einer werkzeuglosen Fixierung einer Einsatzwerkzeugeinheit an der Abtriebswelle zumindest ein beweglich gelagertes Spannelement zu einer Spannkrafteinwirkung auf die Einsatzwerkzeugeinheit in einer Spannposition des Spannelements aufweist, und mit zumindest einer Bedieneinheit zu einer Bewegung des Spannelements in die Spannposition und/oder in eine Löseposition des Spannelements, in der die Einsatzwerkzeugeinheit von der Spanneinheit und/oder der Abtiebswelle abnehmbar ist, bekannt.

Ferner offenbart die EP 1 790 434 A1 eine Schnellspannvorrichtung gemäß dem Oberbegriff von Anspruch 1.

### Offenbarung der Erfindung

Die Erfindung wird in Anspruch 1 definiert. Bevorzugte Ausführungsformen sind in den abhängigen Ansprüchen definiert. Die Erfindung geht aus von einer Schnellspannvorrichtung für eine zumindest eine rotierend antreibbare Abtriebswelle aufweisende tragbare Werkzeugmaschine, insbesondere Winkelschleifmaschine, mit zumindest einer Spanneinheit, die zu einer werkzeuglosen Fixierung einer Einsatzwerkzeugeinheit an der Abtriebswelle zumindest ein beweglich gelagertes Spannelement zu einer Spannkrafteinwirkung auf die Einsatzwerkzeugeinheit in einer Spannposition des Spannelements aufweist, und mit zumindest einer Bedieneinheit zu einer Bewegung des Spannelements in die Spannposition und/oder in eine Löseposition des Spannelements, in der die Einsatzwerkzeugeinheit von der Spanneinheit und/oder der Abtriebswelle abnehmbar ist.

Es wird vorgeschlagen, dass die Schnellspannvorrichtung zumindest eine Entkopplungseinheit umfasst, die dazu vorgesehen ist, die Bedieneinheit in Abhängigkeit von einer Drehzahl der Abtriebswelle von der Spanneinheit zu entkoppeln. Vorzugsweise ist die Entkopplungseinheit dazu vorgesehen, die Bedieneinheit in Abhängigkeit von einer Drehzahl der Abtriebswelle, die insbesondere größer ist als 100 U/min, bevorzugt größer ist als 500 U/min, besonders bevorzugt größer ist als 1000 U/min und ganz besonders bevorzugt größer ist als 5000 U/min, von der Spanneinheit zu entkoppeln. Bei einer Drehzahl der Abtriebswelle von insbesondere weniger als 1000 U/min, bevorzugt von weniger als 500 U/min und besonders bevorzugt von weniger als 100 U/min ist die Entkopplungseinheit dazu vorgesehen, die Bedieneinheit mit der Spanneinheit zu koppeln, insbesondere zu einer Ermöglichung einer Bewegung des Spannelements mittels einer Einwirkung einer Bedienerkraft über die Bedieneinheit. Unter "vorgesehen" soll insbesondere speziell programmiert, ausgelegt und/oder ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Unter "beweglich gelagert" soll insbesondere eine Lagerung eines Elements und/oder einer Einheit verstanden werden, wobei das Element und/oder die Einheit eine Bewegungsmöglichkeit, insbesondere entkoppelt von einer elastischen Verformung des Elements und/oder der Einheit, entlang einer Bewegungsachse von mehr als 5 mm, bevorzugt von mehr als 10 mm und besonders bevorzugt von mehr als 50 mm und/oder um eine Bewegungsachse entlang eines Winkelbereichs von mehr als 1°, bevorzugt von mehr als 5° und besonders bevorzugt von mehr als 15° aufweisen/aufweist.

Bevorzugt ist die Entkopplungseinheit dazu vorgesehen, eine Übertragung einer Betätigungskraft von der Bedieneinheit auf die Spanneinheit in Abhängigkeit von einer Drehzahl der Abtriebswelle zu unterbinden, zu unterbrechen und/oder in eine Bewegung eines Entkopplungselements umzuwandeln. Insbesondere ist die Entkopplungseinheit dazu vorgesehen, eine Kraftübertragungsverbindung zwischen der Bedieneinheit und der Spanneinheit in Abhängigkeit von einer Drehzahl der Abtriebswelle zu unterbinden und/oder zu unterbrechen. Vorzugsweise ist die Entkopplungseinheit als mechanische Entkopplungseinheit ausgebildet. Die Entkopplungseinheit ist vorzugsweise dazu vorgesehen, infolge einer Relativbewegung zwischen zumindest einem Element der Bedieneinheit und zumindest einem Element der Spanneinheit und/oder der Entkopplungseinheit die Bedieneinheit in Abhängigkeit von einer Drehzahl der Abtriebswelle von der Spanneinheit zu entkoppeln. Die Entkopplungseinheit kann ein Kupplungselement, ein Fliehkraftelement, ein Reibungselement oder ein anderes, einem Fachmann als sinnvoll erscheinendes Element aufweisen, mittels dessen die Bedieneinheit in Abhängigkeit von einer Drehzahl der Abtriebswelle von der Spanneinheit entkoppelbar ist. Es ist jedoch auch denkbar, dass die Entkopplungseinheit als elektrische und/oder als elektronische Entkopplungseinheit ausgebildet ist. Beispielsweise ist bei einer Ausgestaltung der Entkopplungseinheit als elektrische und/oder als elektronische Entkopplungseinheit denkbar, dass eine Drehzahl der Abtriebswelle elektronisch erfassbar ist, wie beispielsweise mittels zumindest eines Sensorelements der Entkopplungseinheit oder mittels einer elektronischen Auswertung von Antriebseinheitskenngrößen, wobei mittels eines Aktors der Entkopplungseinheit eine Sperre der Entkopplungseinheit betätigbar ist, die eine Betätigung der Bedieneinheit in Abhängigkeit von einer Drehzahl der Abtriebswelle aktiviert oder deaktiviert, und/oder wobei mittels eines Aktors der Entkopplungseinheit eine Kupplung der Entkopplungseinheit in Abhängigkeit von einer Drehzahl der Abtriebswelle betätigbar ist, die eine Kraftübertragungsverbindung zwischen der Bedieneinheit und der Spanneinheit öffnet oder schließt. Weitere, einem Fachmann als sinnvoll erscheinende Ausgestaltungen der Entkopplungseinheit sind ebenfalls denkbar. Bevorzugt ist die Entkopplungseinheit zumindest teilweise an und/oder in der Abtriebswelle angeordnet. Mittels der Entkopplungseinheit ist vorzugsweise eine Bewegung des Spannelements infolge einer Betätigung eines Bedienelements der Bedieneinheit in Abhängigkeit von einer Drehzahl der Abtriebswelle unterbindbar.

Vorzugsweise ist das Spannelement zumindest teilweise in der Abtriebswelle angeordnet. Bevorzugt umgibt die Abtriebswelle entlang einer Umfangsrichtung, die um eine Rotationsachse der Abtriebswelle verläuft, das Spannelement zumindest teilweise, insbesondere vollständig. Vorzugsweise ist das Spannelement drehfest mit der Abtriebswelle verbunden. Bevorzugt ist das Spannelement schwenkbar um eine Schwenkachse des Spannelements gelagert. Vorzugsweise verläuft die Schwenkachse des Spannelements quer, insbesondere zumindest im Wesentlichen senkrecht, zur Rotationsachse der Abtriebswelle. Bevorzugt verläuft die Schwenkachse des Spannelements zumindest im Wesentlichen senkrecht zu einer Spannachse der Spanneinheit. Unter einer "Spannachse" soll hier insbesondere eine Achse der Spanneinheit verstanden werden, entlang derer eine axiale Sicherungskraft der Spanneinheit auf die Einsatzwerkzeugeinheit zu einer Fixierung der Einsatzwerkzeugeinheit an der Abtriebswelle ausübbar ist und/oder entlang derer ein Übertragungselement der Spanneinheit zu einer Bewegung des Spannelements beweglich gelagert ist. Unter "zumindest im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Bevorzugt ist das Spannelement als Spannbacke ausgebildet. Vorzugsweise ist das Spannelement dazu vorgesehen, die Einsatzwerkzeugeinheit axial an der Abtriebswelle zu sichern. Bevorzugt greift das Spannelement zumindest in der Spannposition zumindest teilweise in die Einsatzwerkzeugeinheit ein, insbesondere in eine Fixierungsausnehmung der Einsatzwerkzeugeinheit. Bevorzugt hintergreift das Spannelement zumindest in einem mittels der Spanneinheit fixierten Zustand der Einsatzwerkzeugeinheit einen Spannfortsatz der Einsatzwerkzeugeinheit.

Vorzugsweise ist das Spannelement mittels einer mechanischen Verbindung zwischen zumindest dem Bedienelement der Bedieneinheit und dem Spannelement mittels der Bedieneinheit in die Spannposition und/oder in die Löseposition bewegbar. Vorzugsweise ist das Bedienelement als Bedienhebel, insbesondere als schwenkbar gelagerter Bedienhebel, ausgebildet. Es ist jedoch auch denkbar, dass mittels eines Bedienelements der Bedieneinheit ein elektrisches Signal erzeugbar ist, mittels dessen ein Aktor ansteuerbar ist, der dazu vorgesehen ist, das Spannelement in die Spannposition und/oder in die Löseposition zu bewegen. Die Bedieneinheit kann als mechanische, als elektrische und/oder als elektronische Bedieneinheit ausgebildet sein, die dazu vorgesehen ist, infolge eines Bedienbefehls eines Bedieners und/oder einer Bedienerkraft eines Bedieners das Spannelement in die Spannposition und/oder in die Löseposition zu bewegen.

Bevorzugt umfasst die Spanneinheit zumindest zwei beweglich, insbesondere schwenkbar, gelagerte Spannelemente. Es ist jedoch auch denkbar, dass die Spanneinheit eine von zwei abweichende Anzahl an Spannelementen umfasst. Bevorzugt weisen die zumindest zwei Spannelemente eine zumindest im Wesentlichen analoge Ausgestaltung auf. Vorzugsweise sind die zumindest zwei Spannelemente der Spanneinheit relativ zueinander beweglich, insbesondere relativ zueinander schwenkbar, gelagert. Insbesondere sind die zumindest zwei Spannelemente mittels der Bedieneinheit in eine Spannposition der Spannelemente und/oder in eine Löseposition der Spannelemente bewegbar. Bevorzugt sind die zumindest zwei Spannelemente mittels der Bedieneinheit gemeinsam bewegbar, insbesondere gemeinsam in die Spannposition und/oder in die Löseposition bewegbar. Es ist jedoch auch denkbar, dass die zumindest zwei Spannelemente mittels der Bedieneinheit unabhängig voneinander in die Spannposition und/oder in die Löseposition bewegbar sind.

Vorzugsweise umfasst die Schnellspannvorrichtung zumindest eine Sicherungseinheit, insbesondere eine Selbsthemmungseinheit und/oder eine Rasteinheit, die dazu vorgesehen ist, zumindest bei einer Einwirkung einer von der Bedieneinheit entkoppelten und in Richtung der Löseposition des Spannelements wirkenden Kraft auf das Spannelement eine Bewegung des Spannelements ausgehend von der Spannposition in die Löseposition des Spannelements, insbesondere bis auf toleranz- und/oder spielbedingte Bewegungen des Spannelements, zu unterbinden. Bevorzugt ist die Sicherungseinheit, insbesondere die Selbsthemmungseinheit und/oder die Rasteinheit, dazu vorgesehen, zumindest bei einer Einwirkung einer von der Bedieneinheit entkoppelten und in Richtung der Löseposition des Spannelements wirkenden Kraft auf das Spannelement das Spannelement ausgehend von der Spannposition weitestgehend gegen eine Bewegung in die Löseposition des Spannelements zu sichern. Unter dem Ausdruck "weitestgehend gegen eine Bewegung zu sichern" soll insbesondere eine Sicherung eines Elements, insbesondere in einer Position des Elements, gegen eine Bewegung verstanden werden, wobei eine toleranz- und/oder spielbedingte Bewegung des Elements in einer gesicherten Position des Elements erfolgen kann. Vorzugsweise ist das Spannelement durch die Sicherungseinheit in der Spannposition mittels einer form- und/oder kraftschlüssigen Verbindung in der Spannposition gegen eine Bewegung in die Löseposition des Spannelements sicherbar. Vorzugsweise ist die Sicherungseinheit zumindest dazu vorgesehen, eine Schwenkbewegung des Spannelements ausgehend von der Spannposition des Spannelements zumindest weitestgehend, insbesondere bis auf eine toleranz- und/oder spielbedingte Schwenkbewegung, gegen eine Schwenkbewegung des Spannelements in die Löseposition zu unterbinden. Die Sicherungseinheit kann als magnetische Sicherungseinheit, als mechanische Sicherungseinheit, als elektronische Sicherungseinheit o. dgl. ausgebildet sein. Bei einer Ausgestaltung der Sicherungseinheit als magnetische Sicherungseinheit ist es denkbar, dass die Sicherungseinheit zumindest ein Magnetelement umfasst, das das Spannelement mittels einer Einwirkung einer Magnetkraft in der Spannposition sichert. Bei einer Ausgestaltung der Sicherungseinheit als mechanische Sicherungseinheit ist es denkbar, dass die Sicherungseinheit zumindest ein mechanisches Sicherungselement umfasst, das das Spannelement mittels einer form- und/oder kraftschlüssigen Verbindung in der Spannposition sichert. Bei einer Ausgestaltung der Sicherungseinheit als elektronische Sicherungseinheit ist es denkbar, dass die Sicherungseinheit zumindest ein elektronisches Element umfasst, das das Spannelement in der Spannposition sichert und/oder das eine Position des Spannelements überwacht und bei einem Erreichen der Spannposition einen Aktor ansteuert, der das Spannelement in der Spannposition sichert. Weitere, einem Fachmann als sinnvoll erscheinende Ausgestaltungen der Sicherungseinheit sind ebenfalls denkbar.

Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere bei einer Drehzahl der Abtriebswelle, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist.

Des Weiteren wird vorgeschlagen, dass die Entkopplungseinheit derart ausgebildet ist, dass in Abhängigkeit von einer Drehzahl der Abtriebswelle eine Relativbewegung zwischen zumindest einem Entkopplungselement der Entkopplungseinheit und zumindest einem Betätigungselement der Bedieneinheit zu einer Entkopplung der Bedieneinheit von der Spanneinheit erfolgt. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist.

Ferner wird vorgeschlagen, dass die Entkopplungseinheit zumindest ein beweglich gelagertes Entkopplungselement aufweist, das in Abhängigkeit von einer Drehzahl der Abtriebswelle in eine Entkopplungsposition überführbar ist, in der die Bedieneinheit von der Spanneinheit entkoppelt ist. Das Entkopplungselement ist bevorzugt in zumindest einer Ausgestaltung der Entkopplungseinheit infolge einer Einwirkung einer durch eine Rotation der Entkopplungseinheit zusammen mit der Abtriebswelle hervorrufbaren Fliehkraft relativ zum Betätigungselement bewegbar. Bevorzugt ist das Entkopplungselement dazu vorgesehen, zu einer Bewegungsentkopplung zwischen der Bedieneinheit und der Spanneinheit infolge einer Einwirkung einer Fliehkraft auf das Entkopplungselement in Abhängigkeit von einer Drehzahl der Abtriebswelle eine Führungsausnehmung des Übertragungselements freizugeben, in die das Betätigungselement zumindest teilweise hineinbewegbar ist. Vorzugsweise ist das Entkopplungselement in zumindest einer Ausgestaltung der Entkopplungseinheit infolge einer Einwirkung einer Reibkraft auf das Entkopplungselement relativ zum Betätigungselement und/oder zum Übertragungselement bewegbar und/oder abbremsbar. Vorzugsweise ist das Entkopplungselement mittels eines Kulissenelements, insbesondere mittels einer Kulissenführungsbahn, der Entkopplungseinheit führbar. Bevorzugt ist das Kulissenelement, insbesondere die Kulissenführungsbahn, dazu vorgesehen, einen Leerhub des Entkopplungselements relativ zum Übertragungselement und/oder zur Abtriebswelle entlang einer zumindest im Wesentlichen parallel zur Rotationsachse der Abtriebswelle verlaufenden Richtung zu ermöglichen. Es kann vorteilhaft sichergestellt werden, dass bei einer hohen Drehzahl der Abtriebswelle, wie beispielsweise bei einer Drehzahl der Abtriebswelle größer als 10000 U/min, eine zuverlässige Bewegung des Entkopplungselements um die Rotationsachse der Abtriebswelle relativ zur Abtriebswelle und/oder zum Übertragungselement erfolgen kann. Das Kulissenelement, insbesondere die Kulissenführungsbahn, ist vorzugsweise derart ausgebildet, dass eine entlang einer zumindest im Wesentlichen parallel zur Rotationsachse der Abtriebswelle verlaufende axiale Bewegung des Entkopplungselements vor einer relativen Verdrehung des Entkopplungselements und der Abtriebswelle möglich ist. Bevorzugt ist das Entkopplungselement, das zusammen mit der Abtriebswelle rotierend antreibbar ist, mittels des Betätigungselements bremsbar, insbesondere zu einer Ermöglichung einer Relativbewegung zwischen dem Entkopplungselement und dem Übertragungselement. Vorzugsweise umfasst das Entkopplungselement einen konischen Verbindungsbereich, der zumindest teilweise in eine Ausnehmung des Betätigungselements eingreift. Bevorzugt umfasst die Entkopplungseinheit zumindest ein Entkopplungsfederelement, das das Entkopplungselement mit einer Federkraft in Richtung des Betätigungselements beaufschlagt. Vorzugsweise ist der konische Verbindungsbereich derart ausgebildet, dass ein Reibmoment und/oder eine Reibkraft zwischen dem Betätigungselement und dem Entkopplungselement größer sind/ist als ein Reibmoment und/oder eine Reibkraft zwischen dem Entkopplungselement und dem Entkopplungsfederelement. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine Rotation der Abtriebswelle zu einer Entkopplung der Bedieneinheit von der Spanneinheit in Abhängigkeit von einer Drehzahl der Antriebseinheit genutzt werden.

Zudem wird vorgeschlagen, dass die Entkopplungseinheit als Fliehkraftentkopplungseinheit ausgebildet ist. Vorzugsweise ist zumindest ein Entkopplungselement der Entkopplungseinheit infolge einer Einwirkung einer durch eine Rotation der Entkopplungseinheit zusammen mit der Abtriebswelle hervorrufbaren Fliehkraft auf das Entkopplungselement bewegbar. Bevorzugt ist zumindest ein Entkopplungselement der Entkopplungseinheit infolge einer Einwirkung einer durch eine Rotation der Entkopplungseinheit zusammen mit der Abtriebswelle hervorrufbaren Fliehkraft entlang einer quer, insbesondere zumindest im Wesentlichen senkrecht, zur Rotationsachse der Abtriebswelle verlaufenden Richtung in Abhängigkeit von einer Drehzahl der Abtriebswelle bewegbar. Bevorzugt umfasst die Entkopplungseinheit zumindest das Entkopplungsfederelement, das dazu vorgesehen ist, das Entkopplungselement, insbesondere nach einer Aufhebung einer Einwirkung einer Fliehkraft auf das Entkopplungselement, in eine Kopplungsposition, in der die Bedieneinheit zumindest bewegungstechnisch mit der Spanneinheit verbindbar ist, zu bewegen. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine Rotation der Abtriebswelle zu einer Entkopplung der Bedieneinheit von der Spanneinheit in Abhängigkeit von einer Drehzahl der Antriebseinheit genutzt werden.

Des Weiteren wird vorgeschlagen, dass die Entkopplungseinheit zumindest ein beweglich gelagertes Entkopplungselement aufweist, das in Abhängigkeit von einer Drehzahl der Abtriebswelle gegen eine Federkraft zumindest eines Federelements der Entkopplungseinheit bewegbar ist. Das Federelement ist vorzugsweise als Druckfeder, insbesondere als Schraubendruckfeder, ausgebildet. Es ist jedoch auch denkbar, dass das Entkopplungsfederelement als Zugfeder, als Torsionsfeder oder als ein anderes, einem Fachmann als sinnvoll erscheinendes Federelement ausgebildet ist. Bevorzugt wirkt eine Federkraft des Federelements entlang einer zumindest im Wesentlichen senkrecht zur Rotationsachse verlaufenden Richtung oder entlang einer zumindest im Wesentlichen parallel zur Rotationsachse verlaufenden Richtung. Vorzugsweise stützt sich das Entkopplungsfederelement mit einem Ende am Entkopplungselement ab und mit einem weiteren Ende stützt sich das Entkopplungsfederelement an dem Übertragungselement, an der Abtriebswelle, insbesondere an einer Innenseite der Abtriebswelle, oder an einem anderen, einem Fachmann als sinnvoll erscheinenden Element der Schnellspannvorrichtung ab. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine selbsttätige Rückstellung des Entkopplungselements in eine Kopplungsposition des Entkopplungselements ermöglicht werden.

Ferner wird vorgeschlagen, dass die Entkopplungseinheit zumindest ein beweglich gelagertes Entkopplungselement, das in Abhängigkeit von einer Drehzahl der Abtriebswelle bewegbar ist, insbesondere in eine Entkopplungsposition bewegbar ist, und zumindest ein Magnetelement zu einer Rückstellung des Entkopplungselements in eine Kopplungsposition des Entkopplungselements umfasst. Das Magnetelement kann als Dauermagnet ausgebildet sein oder als Elektromagnet. Vorzugsweise ist das Magnetelement als Dauermagnet ausgebildet. Bevorzugt ist das Magnetelement an dem Entkopplungselement fixiert, insbesondere einteilig mit dem Entkopplungselement ausgebildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Bevorzugt ist das Betätigungselement aus einem ferromagnetischen Werkstoff gebildet. Es ist jedoch auch denkbar, dass das Magnetelement an dem Betätigungselement oder an dem Übertragungselement angeordnet ist und das Entkopplungselement aus einem ferromagnetischen Werkstoff gebildet ist. Weitere, einem Fachmann als sinnvoll erscheinende Anordnungen und/oder Ausgestaltungen des Magnetelements zu einer Rückstellung des Entkopplungselements sind ebenfalls denkbar. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist.

Zudem wird vorgeschlagen, dass die Entkopplungseinheit zumindest ein Entkopplungselement aufweist, das einen beweglichen Kopplungsfortsatz zu einer Verbindung mit einem Betätigungselement der Bedieneinheit und/oder einem Übertragungselement der Spanneinheit in Abhängigkeit von einer Drehzahl der Abtriebswelle aufweist. Vorzugsweise umfasst die Entkopplungseinheit zumindest ein Verbindungsfederelement, das dazu vorgesehen ist, den Kopplungsfortsatz und einen Grundkörper des Entkopplungselements relativ zueinander auszurichten, insbesondere den Kopplungsfortsatz in eine Kopplungsposition zu bewegen, oder den Kopplungsfortsatz und einen Grundkörper des Entkopplungselements druckfest zu einer Übertragung von Druckkräften miteinander zu verbinden, insbesondere in Abhängigkeit von einer Drehzahl der Abtriebswelle. Das Verbindungsfederelement ist vorzugsweise als Torsionsfeder, insbesondere als Schenkelfeder, ausgebildet. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine besonders kompakte Ausgestaltung der Entkopplungseinheit erreicht werden, die wenig Bauraum benötigt.

Des Weiteren wird, insbesondere in einer alternativen Ausgestaltung der Schnellspannvorrichtung, vorgeschlagen, dass die Entkopplungseinheit als Reibungsentkopplungseinheit ausgebildet ist. Die Entkopplungseinheit umfasst vorzugsweise zumindest ein Kupplungselement, insbesondere ein sich in Abhängigkeit von einer Drehzahl der Abtriebswelle öffnendes Reibkupplungselement oder das Entkopplungselement mit dem konischen Verbindungsbereich, mittels dessen die Bedieneinheit in Abhängigkeit von einer Drehzahl der Abtriebswelle von der Spanneinheit entkoppelbar ist. Vorzugsweise ist die Entkopplungseinheit dazu vorgesehen, infolge einer Trennung einer Reibpaarung zwischen dem Betätigungselement und dem Übertragungselement die Bedieneinheit in Abhängigkeit von einer Drehzahl der Abtriebswelle von der Spanneinheit zu entkoppeln oder infolge einer Herstellung einer Reibpaarung zwischen dem Betätigungselement und dem Entkopplungselement die Bedieneinheit in Abhängigkeit von einer Drehzahl der Abtriebswelle von der Spanneinheit zu entkoppeln, insbesondere infolge einer durch die Herstellung der Reibpaarung hervorrufbare Relativbewegung zwischen dem Betätigungselement und dem Entkopplungselement oder zwischen dem Entkopplungselement und dem Übertragungselement. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist.

Ferner wird vorgeschlagen, dass die Entkopplungseinheit zumindest ein beweglich gelagertes Entkopplungselement aufweist, das infolge einer Reibkraft zwischen dem Entkopplungselement und einem Betätigungselement der Bedieneinheit relativ zur Abtriebswelle bewegbar ist. Das Betätigungselement kann als Kupplung, als Bremsbolzen, als instabiles Element mit einem elastisch oder gelenkig beweglichen Teilbereich o. dgl. ausgebildet sein. Vorzugsweise ist die Bedieneinheit infolge einer Relativbewegung des Entkopplungselements relativ zur Abtriebswelle in Abhängigkeit von einer Drehzahl der Abtriebswelle von der Spanneinheit entkoppelbar. Vorzugsweise umfasst das Entkopplungselement einen konischen Verbindungsbereich, der zumindest teilweise in eine Ausnehmung des Betätigungselements eingreift. Der konische Verbindungsbereich ist vorzugsweise als konische Spitze des Entkopplungselements ausgebildet. Alternativ ist es auch denkbar, dass das Entkopplungselement eine Überrastgeometrie, wie beispielsweise eine Verzahnung, eine Nockengeometrie o. dgl., aufweist und das Betätigungselement eine korrespondierende Überrastgeometrie aufweist, um eine Relativbewegung des Entkopplungselements infolge eines Zusammenwirkens zwischen dem Betätigungselement und dem Entkopplungselement zu realisieren. Bevorzugt umfasst die Entkopplungseinheit zumindest ein Entkopplungsfederelement, das das Entkopplungselement mit einer Federkraft in Richtung des Betätigungselements beaufschlagt. Vorzugsweise ist der konische Verbindungsbereich derart ausgebildet, dass ein Reibmoment und/oder eine Reibkraft zwischen dem Betätigungselement und dem Entkopplungselement größer sind/ist als ein Reibmoment und/oder eine Reibkraft zwischen dem Entkopplungselement und dem Entkopplungsfederelement. Bevorzugt weist das Entkopplungsfederelement eine maximale Federkraft auf, die insbesondere kleiner ist als 10 N, bevorzugt kleiner ist als 5 N und besonders bevorzugt kleiner ist als 2 N. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann konstruktiv einfach infolge einer Einwirkung einer Reibkraft eine Relativbewegung zwischen dem Entkopplungselement und der Abtriebswelle zu einer Entkopplung der Bedieneinheit von der Spanneinheit in Abhängigkeit von einer Drehzahl der Abtriebswelle ermöglicht werden.

Zudem wird vorgeschlagen, dass die Entkopplungseinheit zumindest ein beweglich gelagertes Entkopplungselement und zumindest ein Entkopplungsfederelement umfasst, das das Entkopplungselement mit einer Federkraft in Richtung der Bedieneinheit beaufschlagt. Vorzugsweise beaufschlagt das Entkopplungsfederelement das Entkopplungselement in Richtung einer Kopplungsposition des Entkopplungselements. Das Entkopplungsfederelement ist vorzugsweise in einer Führungsausnehmung des Übertragungselements angeordnet. Das Entkopplungsfederelement stützt sich vorzugsweise mit zumindest einem Ende am Entkopplungselement ab und mit zumindest einem weiteren Ende stützt sich das Entkopplungsfederelement am Übertragungselement, insbesondere an einer Innenseite des Übertragungselements, ab. Das Entkopplungsfederelement ist vorzugsweise als Druckfeder, insbesondere als Schraubendruckfeder, ausgebildet. Es ist jedoch auch denkbar, dass das Entkopplungsfederelement eine andere, einem Fachmann als sinnvoll erscheinende Ausgestaltung aufweist. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine selbsttätige Rückstellung des Entkopplungselements in eine Kopplungsposition ermöglicht werden.

Des Weiteren wird vorgeschlagen, dass die Entkopplungseinheit zumindest ein beweglich gelagertes Entkopplungselement und zumindest ein Kulissenelement zu einer Führung des Entkopplungselements bei einer Relativbewegung des Entkopplungselements relativ zur Abtriebswelle aufweist. Das Kulissenelement ist vorzugsweise als Kulissenführungsbahn ausgebildet. Das Kulissenelement ist vorzugsweise am Übertragungselement angeordnet. Bevorzugt greift ein an dem Entkopplungselement angeordneter Führungsbolzen der Entkopplungseinheit in das Kulissenelement ein. Es ist jedoch auch denkbar, dass das Entkopplungselement zumindest einen einteilig mit dem Entkopplungselement ausgebildeten Fortsatz aufweist, der in das Kulissenelement zu einer Führung des Entkopplungselements eingreift. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine sichere Überführung des Entkopplungselements in eine Entkopplungsposition ermöglicht werden.

Ferner wird vorgeschlagen, dass die Entkopplungseinheit zumindest ein beweglich gelagertes Entkopplungselement aufweist, das entlang einer und/oder um eine Rotationsachse der Abtriebswelle in der Abtriebswelle beweglich gelagert ist. Die Rotationsachse der Abtriebswelle verläuft bevorzugt zumindest im Wesentlichen parallel, insbesondere koaxial, zur Spannachse der Spanneinheit. Die Rotationsachse der Abtriebswelle verläuft vorzugsweise quer, insbesondere zumindest im Wesentlichen senkrecht, zu einer Antriebsachse, insbesondere einer Rotorachse, einer Antriebseinheit der tragbaren Werkzeugmaschine. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft eine besonders kompakte Ausgestaltung der erfindungsgemäßen Schnellspannvorrichtung realisiert werden.

Zudem wird vorgeschlagen, dass die Entkopplungseinheit zumindest ein Ausgabeelement aufweist, das dazu vorgesehen ist, einem Bediener zumindest einen Funktionszustand der Entkopplungseinheit auszugeben. Das Ausgabeelement kann als mechanisches Element, als elektronisches Element oder als elektrisches Element ausgebildet sein. Vorzugsweise ist das Ausgabeelement dazu vorgesehen, einem Bediener haptisch, akustisch und/oder optisch einen Funktionszustand der Sicherungseinheit auszugeben. Der Funktionszustand der Entkopplungseinheit beschreibt vorzugsweise einen Zustand der Entkopplungseinheit, wie beispielsweise einen gekoppelten oder entkoppelten der Bedieneinheit von der Spanneinheit, einen Defekt der Entkopplungseinheit oder andere, einem Fachmann als sinnvoll erscheinende Zustände der Entkopplungseinheit. Das Ausgabeelement kann als Display, als einzelne Leuchtquelle, wie beispielswiese eine LED, als mechanisch bewegbares Anzeigeelement, als Lautsprecher o. dgl. ausgebildet sein. Mittels der erfindungsgemäßen Ausgestaltung der Schnellspannvorrichtung kann vorteilhaft eine hohe Bedienersicherheit realisiert werden. Es kann vorteilhaft bei einer hohen Drehzahl der Abtriebswelle, insbesondere einer Drehzahl, die größer ist als 1000 U/min, eine Bewegung des Spannelements infolge einer Betätigung der Bedieneinheit vermieden werden, um ein Lösen der Einsatzwerkzeugeinheit von der Spanneinheit und/oder der Abtriebswelle während einer Rotation der Abtriebswelle mit einer hohen Drehzahl zu vermeiden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist. Es kann vorteilhaft einem Bediener signalisiert werden, ob die Bedieneinheit zuverlässig mittels der Entkopplungseinheit von der Spanneinheit entkoppelt ist oder ob ein Defekt der Entkopplungseinheit vorliegt.

Des Weiteren wird eine tragbare Werkzeugmaschine, insbesondere eine Winkelschleifmaschine, mit einer erfindungsgemäßen Schnellspannvorrichtung vorgeschlagen. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Besonders bevorzugt ist die tragbare Werkzeugmaschine als Winkelschleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Kreissägemaschine, als Schleifmaschine o. dgl. Die tragbare Werkzeugmaschine umfasst vorzugsweise eine rotierend antreibbare Abtriebswelle. Vorzugsweise ist die Schnellspannvorrichtung an der Abtriebswelle angeordnet. Bevorzugt ist die Schnellspannvorrichtung zumindest teilweise in der Abtriebswelle angeordnet. Vorzugsweise ist die Abtriebswelle als Hohlwelle ausgebildet. Insbesondere bildet die tragbare Werkzeugmaschine zusammen mit einer Einsatzwerkzeugeinheit, die mittels der Schnellspannvorrichtung an der Abtriebswelle fixierbar ist, ein Werkzeugmaschinensystem. Mittels der erfindungsgemäßen Ausgestaltung kann vorteilhaft eine hohe Bedienersicherheit ermöglicht werden. Es kann vorteilhaft sichergestellt werden, dass eine Überführung der Schnellspannvorrichtung, insbesondere des Spannelements der Spanneinheit der Schnellspannvorrichtung, bei einer hohen Drehzahl der Abtriebswelle in eine Löseposition vermeidbar ist.

Es zeigen:
- Fig. 1: eine erfindungsgemäße tragbare Werkzeugmaschine mit einer erfindungsgemäßen Schnellspannvorrichtung in einer schematischen Darstellung,
- Fig. 2: eine Schnittansicht der erfindungsgemäßen tragbaren Werkzeugmaschine und der erfindungsgemäßen Schnellspannvorrichtung in einer schematischen Darstellung,
- Fig. 3: eine Detailansicht einer Entkopplungseinheit der erfindungsgemäßen Schnellspannvorrichtung in einer schematischen Darstellung,
- Fig. 4: eine Schnittansicht einer alternativen erfindungsgemäßen tragbaren Werkzeugmaschine und einer alternativen erfindungsgemäßen Schnellspannvorrichtung mit einer alternativen Entkopplungseinheit in einer schematischen Darstellung,
- Fig. 5: eine Detailansicht der Entkopplungseinheit der alternativen erfindungsgemäßen Schnellspannvorrichtung aus Figur 4 in einer schematischen Darstellung,
- Fig. 6: eine Schnittansicht einer weiteren alternativen erfindungsgemäßen tragbaren Werkzeugmaschine und einer weiteren alternativen erfindungsgemäßen Schnellspannvorrichtung mit einer weiteren alternativen Entkopplungseinheit in einer schematischen Darstellung,
- Fig. 7: eine Detailansicht einer weiteren alternativen Entkopplungseinheit einer weiteren alternativen erfindungsgemäßen Schnellspannvorrichtung in einer schematischen Darstellung,
- Fig. 8: eine Detailansicht einer weiteren alternativen Entkopplungseinheit einer weiteren alternativen erfindungsgemäßen Schnellspannvorrichtung in einer schematischen Darstellung,
- Fig. 9: eine Detailansicht einer weiteren alternativen Entkopplungseinheit einer weiteren alternativen erfindungsgemäßen Schnellspannvorrichtung in einer schematischen Darstellung,
- Fig. 10: eine Detailansicht einer weiteren alternativen Entkopplungseinheit einer weiteren alternativen erfindungsgemäßen Schnellspannvorrichtung in einer schematischen Darstellung,
- Fig. 11: eine Detailansicht einer weiteren alternativen Entkopplungseinheit einer weiteren alternativen erfindungsgemäßen Schnellspannvorrichtung in einer schematischen Darstellung,
- Fig. 12: eine Detailansicht einer weiteren alternativen Entkopplungseinheit einer weiteren alternativen erfindungsgemäßen Schnellspannvorrichtung in einer schematischen Darstellung,
- Fig. 13: eine Detailansicht einer weiteren alternativen Entkopplungseinheit einer weiteren alternativen erfindungsgemäßen Schnellspannvorrichtung in einer schematischen Darstellung,
- Fig. 14: eine Detailansicht einer weiteren alternativen Entkopplungseinheit einer weiteren alternativen erfindungsgemäßen Schnellspannvorrichtung in einer schematischen Darstellung,
- Fig. 15: eine Detailansicht einer weiteren alternativen Entkopplungseinheit einer weiteren alternativen erfindungsgemäßen Schnellspannvorrichtung in einer schematischen Darstellung,
- Fig. 16: eine Detailansicht einer weiteren alternativen Entkopplungseinheit einer weiteren alternativen erfindungsgemäßen Schnellspannvorrichtung in einer schematischen Darstellung und
- Fig. 17: eine Detailansicht einer weiteren alternativen Entkopplungseinheit einer weiteren alternativen erfindungsgemäßen Schnellspannvorrichtung in einer schematischen Darstellung.

### Beschreibung der Ausführungsbeispiele

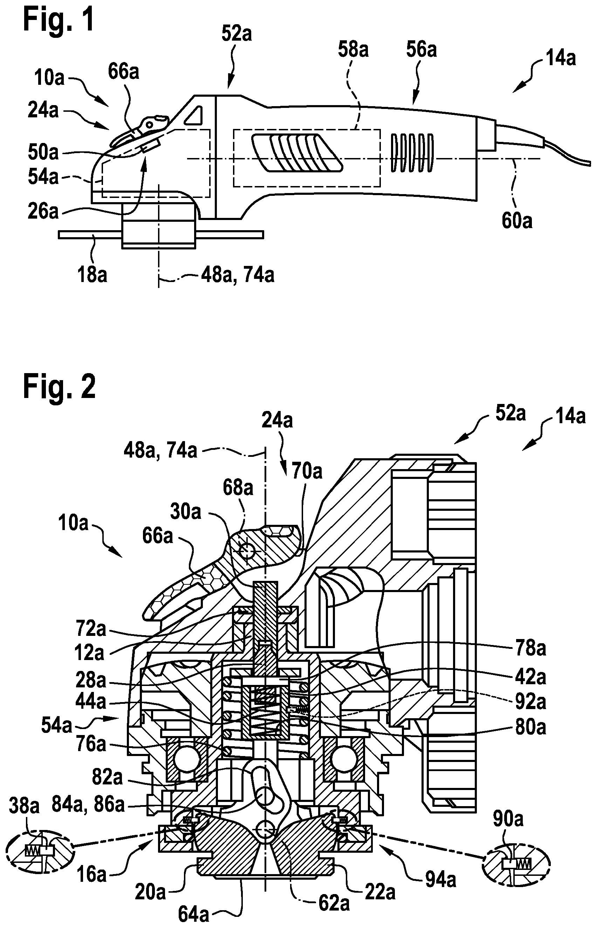

Figur 1 zeigt eine als Winkelschleifmaschine ausgebildete tragbare Werkzeugmaschine 14a mit einer Schnellspannvorrichtung 10a. Es ist jedoch auch denkbar, dass die tragbare Werkzeugmaschine 14a eine andere, einem Fachmann als sinnvoll erscheinende Ausgestaltung aufweist, wie beispielsweise eine Ausgestaltung als Kreissägemaschine, als Schleifmaschine o. dgl. Die tragbare Werkzeugmaschine 14a umfasst ein Getriebegehäuse 52a zu einer Aufnahme und/oder Lagerung einer Getriebeeinheit 54a der tragbaren Werkzeugmaschine 14a. Das Getriebegehäuse 52a ist vorzugsweise aus einem metallischen Werkstoff gebildet. Es ist jedoch auch denkbar, dass das Getriebegehäuse 52a aus einem anderen, einem Fachmann als sinnvoll erscheinenden Werkstoff gebildet ist, wie beispielsweise aus Kunststoff o. dgl. Die Getriebeeinheit 54a ist vorzugsweise als Winkelgetriebe ausgebildet. Die Getriebeeinheit 54a umfasst insbesondere eine rotierend antreibbare Abtriebswelle 12a, an der eine Einsatzwerkzeugeinheit 18a fixierbar ist, insbesondere mittels der Schnellspannvorrichtung 10a. Die Abtriebswelle 12a ist vorzugsweise als Hohlspindel ausgebildet, in der die Schnellspannvorrichtung 10a zumindest teilweise angeordnet ist (Figur 2). An dem Getriebegehäuse 52a ist auf eine, einem Fachmann bereits bekannte Art und Weise eine hier nicht näher dargestellte Schutzhaubeneinheit anordenbar. An dem Getriebegehäuse 52a ist auf eine, einem Fachmann bereits bekannte Art und Weise ein hier nicht näher dargestellter Zusatzhandgriff anordenbar. Die tragbare Werkzeugmaschine 14a umfasst ein Motorgehäuse 56a zu einer Aufnahme und/oder Lagerung einer Antriebseinheit 58a der tragbaren Werkzeugmaschine 14a. Die Antriebseinheit 58a ist vorzugsweise auf eine, einem Fachmann bereits bekannte Art und Weise dazu vorgesehen, mittels eines Zusammenwirkens mit der Getriebeeinheit 54a die Abtriebswelle 12a rotierend um eine Rotationsachse 48a der Abtriebswelle 12a anzutreiben. Die Rotationsachse 48a der Abtriebswelle 12a verläuft zumindest im Wesentlichen senkrecht zu einer Antriebsachse 60a der Antriebseinheit 58a. Die Antriebseinheit 58a ist vorzugsweise als Elektromotoreinheit ausgebildet. Es ist jedoch auch denkbar, dass die Antriebseinheit 58a eine andere, einem Fachmann als sinnvoll erscheinende Ausgestaltung aufweist, wie beispielsweise eine Ausgestaltung als Verbrennungsantriebseinheit, als Hybridantriebseinheit, als Pneumatikantriebseinheit o. dgl.

Figur 2 zeigt eine Schnittansicht der tragbaren Werkzeugmaschine 14a, insbesondere im Bereich des Getriebegehäuses 52a, und der Schnellspannvorrichtung 10a. Die Schnellspannvorrichtung 10a für die zumindest die rotierend antreibbare Abtriebswelle 12a aufweisende tragbare Werkzeugmaschine 14a umfasst zumindest eine Spanneinheit 16a, die zu einer werkzeuglosen Fixierung der Einsatzwerkzeugeinheit 18a an der Abtriebswelle 12a zumindest ein beweglich gelagertes Spannelement 20a, 22a zu einer Spannkrafteinwirkung auf die Einsatzwerkzeugeinheit 18a in einer Spannposition des Spannelements 20a, 22a aufweist. Ferner umfasst die Schnellspannvorrichtung 10a zumindest eine Bedieneinheit 24a zu einer Bewegung des Spannelements 20a, 22a in die Spannposition und/oder in eine Löseposition des Spannelements 20a, 22a, in der die Einsatzwerkzeugeinheit 18a von der Spanneinheit 16a und/oder der Abtriebswelle 12a abnehmbar ist. Die Spanneinheit 16a umfasst zumindest zwei beweglich gelagerte Spannelemente 20a, 22a. Es ist jedoch auch denkbar, dass die Spanneinheit 16a eine von zwei abweichende Anzahl an Spannelementen 20a, 22a umfasst. Die zumindest zwei Spannelemente 20a, 22a weisen eine zumindest im Wesentlichen analoge Ausgestaltung auf, so dass Merkmale, die zu einem der Spannelemente 20a, 22a offenbart werden, als ebenso für das weitere Spannelement 20a, 22a als offenbart anzusehen sind. Die zumindest zwei Spannelemente 20a, 22a sind schwenkbar gelagert. Eine Schwenkachse 62a der zumindest zwei Spannelemente 20a, 22a verläuft zumindest im Wesentlichen senkrecht zur Rotationsachse 48a der Abtriebswelle 12a. Die zumindest zwei Spannelemente 20a, 22a sind dazu vorgesehen, die Einsatzwerkzeugeinheit 18a in einem an der Spanneinheit 16a und/oder der Abtriebswelle 12a angeordneten Zustand axial an der Abtriebswelle 12a zu fixieren, insbesondere in der Spannposition der zumindest zwei Spannelemente 20a, 22a. Die zumindest zwei Spannelemente 20a, 22a sind drehfest mit der Abtriebswelle 12a verbunden. Die zumindest zwei Spannelemente 20a, 22a sind zusammen mit der Abtriebswelle 12a rotierend um die Rotationsachse 48a antreibbar.

Die Spanneinheit 16a umfasst zu einer Drehmomentübertragung auf die Einsatzwerkzeugeinheit 18a zumindest ein Drehmitnahmeelement 64a. Das Drehmitnahmeelement 64a greift in einem an der Spanneinheit 16a und/oder der Abtriebswelle 12a angeordneten Zustand der Einsatzwerkzeugeinheit 18a in eine Aufnahmeausnehmung (hier nicht näher dargestellt) der Einsatzwerkzeugeinheit 18a ein und liegt zu einer Drehmomentübertragung an zumindest einem die Aufnahmeausnehmung begrenzenden Rand der Einsatzwerkzeugeinheit 18a an. Eine Drehmomentübertragung zwischen der Abtriebswelle 12a und der an der Spanneinheit 16a und/oder der Abtriebswelle 12a angeordneten Einsatzwerkzeugeinheit 18a erfolgt vorzugsweise auf eine, einem Fachmann bereits bekannte Art und Weise mittels einer formschlüssigen Verbindung zwischen dem Drehmitnahmeelement 64a und der Einsatzwerkzeugeinheit 18a. Das Drehmitnahmeelement 64a ist drehfest an der Abtriebswelle 12a angeordnet. Das Drehmitnahmeelement 64a ist zusammen mit der Abtriebswelle 12a rotierend um die Rotationsachse 48a antreibbar.

Die Bedieneinheit 24a ist vorzugsweise dazu vorgesehen, das Spannelement 20a, 22a, insbesondere die zumindest zwei Spannelemente 20a ,22a, zumindest in die Löseposition zu bewegen, in der die Einsatzwerkzeugeinheit 18a von der Spanneinheit 16a und/oder der Abtriebswelle 12a abnehmbar ist. Alternativ oder zusätzlich ist es denkbar, dass die Bedieneinheit 24a dazu vorgesehen ist, das Spannelement 20a, 22a, insbesondere die zumindest zwei Spannelemente 20a, 22a, zumindest in die Spannposition zu bewegen, in der die Einsatzwerkzeugeinheit 18a mittels der Spanneinheit 16a an der Abtriebswelle 12a fixierbar ist. Die Bedieneinheit 24a umfasst vorzugweise zumindest ein Bedienelement 66a, das von einem Bediener betätigbar ist. Das Bedienelement 66a ist als Bedienhebel ausgebildet. Das Bedienelement 66a umfasst eine Bewegungsachse 68a, insbesondere eine Schwenkachse, die quer, insbesondere zumindest im Wesentlichen senkrecht, zur Rotationsachse 48a der Abtriebswelle 12a verläuft. Das Bedienelement 66a ist vorzugsweise um die Bewegungsachse 68a, insbesondere Schwenkachse, schwenkbar gelagert. Das Bedienelement 66a ist von einer Drehbewegung der Abtriebswelle 12a entkoppelt. Das Bedienelement 66a umfasst einen Exzenterabschnitt 70a zu einer Betätigung eines Betätigungselements 30a der Bedieneinheit 24a. Das Betätigungselement 30a ist translatorisch beweglich entlang der Rotationsachse 48a gelagert, insbesondere in der Abtriebswelle 12a und/oder im Getriebegehäuse 52a. Das Betätigungselement 30a ist gegen eine Verdrehung relativ zum Getriebegehäuse 52a im Getriebegehäuse 52a fixiert, insbesondere infolge zumindest einer seitlichen Abflachung des Betätigungselements 30a, die eine axiale Bewegung ermöglicht und eine rotatorische Bewegung unterbindet. Vorzugsweise weist das Betätigungselement 30a an zwei sich abgewandten Seiten des Betätigungselements 30a jeweils zumindest eine Abflachung auf. Es ist jedoch auch denkbar, dass das Betätigungselement 30a eine andere, einem Fachmann als sinnvoll erscheinende Ausgestaltung aufweist, wie beispielsweise einen polygonalen Querschnitt, eine Verzahnung o. dgl., die dazu vorgesehen ist, das Betätigungselement 30a gegen eine Verdrehung relativ zum Getriebegehäuse 52a zu sichern. Im Bereich des Betätigungselements 30a ist vorzugsweise ein Dichtungselement 72a, wie beispielsweise eine Gummidichtung o. dgl., angeordnet, um insbesondere ein Eindringen von Schmutz in das Getriebegehäuse 52a und/oder in die Spanneinheit 16a zumindest weitestgehend zu vermeiden. Das Dichtungselement 72a liegt vorzugsweise an dem Betätigungselement 30a an. Das Betätigungselement 30a ist insbesondere relativ zum Dichtungselement 72a beweglich gelagert. Das Betätigungselement 30a gleitet bei einer Bewegung relativ zum Dichtungselement 72a an zumindest einer Dichtfläche des Dichtungselements 72a.

Die Schnellspannvorrichtung 10a umfasst zumindest eine Entkopplungseinheit 26a, die dazu vorgesehen ist, die Bedieneinheit 24a in Abhängigkeit von einer Drehzahl der Abtriebswelle 12a von der Spanneinheit 16a zu entkoppeln. Die Entkopplungseinheit 26a ist derart ausgebildet, dass in Abhängigkeit von einer Drehzahl der Abtriebswelle 12a eine Relativbewegung zwischen zumindest einem Entkopplungselement 28a der Entkopplungseinheit 26a und zumindest dem Betätigungselement 30a der Bedieneinheit 24a zu einer Entkopplung der Bedieneinheit 24a von der Spanneinheit 16a erfolgt. Die Entkopplungseinheit 26a umfasst zumindest das beweglich gelagerte Entkopplungselement 28a, das in Abhängigkeit von einer Drehzahl der Abtriebswelle 12a in eine Entkopplungsposition überführbar ist, in der die Bedieneinheit 24a von der Spanneinheit 16a entkoppelt ist. Die Entkopplungseinheit 26a ist vorzugsweise als Reibungsentkopplungseinheit ausgebildet. Die Entkopplungseinheit 26a weist zumindest das beweglich gelagerte Entkopplungselement 28a auf, das infolge einer Reibkraft zwischen dem Entkopplungselement 28a und dem Betätigungselement 30a der Bedieneinheit 24a relativ zur Abtriebswelle 12a bewegbar ist. Die Entkopplungseinheit 26a weist zumindest das beweglich gelagerte Entkopplungselement 28a auf, das entlang der und/oder um die Rotationsachse 48a der Abtriebswelle 12a in der Abtriebswelle 12a beweglich gelagert ist. Die Entkopplungseinheit 26a umfasst zumindest das beweglich gelagerte Entkopplungselement 28a und zumindest ein Entkopplungsfederelement 44a, das das Entkopplungselement 28a mit einer Federkraft in Richtung der Bedieneinheit 24a beaufschlagt. Die Entkopplungseinheit 26a weist zumindest das beweglich gelagerte Entkopplungselement 28a und zumindest ein Kulissenelement 46a zu einer Führung des Entkopplungselements 28a bei einer Relativbewegung des Entkopplungselements 28a relativ zur Abtriebswelle 12a auf.

Das Entkopplungselement 28a ist mittels einer kraftschlüssigen Verbindung mit dem Betätigungselement 30a in Kontakt bringbar oder das Entkopplungselement 28a steht mittels einer kraftschlüssigen Verbindung mit dem Betätigungselement 30a in Kontakt. Das Entkopplungselement 28a ist vorzugsweise translatorisch entlang der Rotationsachse 48a beweglich gelagert, insbesondere in der Abtriebswelle 12a oder in einem Übertragungselement 42a der Spanneinheit 16a. Das Entkopplungselement 28a umfasst insbesondere einen konischen Verbindungsbereich, der zumindest teilweise in eine Ausnehmung des Betätigungselements 30a eingreift. Eine Reibwirkung zwischen dem Betätigungselement 30a und dem Entkopplungselement 28a ist insbesondere abhängig von einer Ausgestaltung des konischen Verbindungsbereichs und einer Federkraft des Entkopplungsfederelements 44a. Das Entkopplungsfederelement 44a ist dazu vorgesehen, das Entkopplungselement 28a mit einer Federkraft in Richtung des Betätigungselements 30a zu beaufschlagen. Das Entkopplungsfederelement 44a ist in dem Übertragungselement 42a der Spanneinheit 16a angeordnet. Das Übertragungselement 42a ist als Spanngabel ausgebildet. Das Übertragungselement 42a ist drehfest mit der Abtriebswelle 12a verbunden. Das Übertragungselement 42a ist entlang einer Spannachse 74a der Spanneinheit 16a translatorisch bewegbar. Das Übertragungselement 42a ist in der Abtriebswelle 12a beweglich gelagert. Das Übertragungselement 42a ist zumindest mittels eines Spannfederelements 76a der Spanneinheit 16a entlang der Spannachse 74a, insbesondere in Richtung der Bedieneinheit 24a, mit einer Federkraft beaufschlagbar.

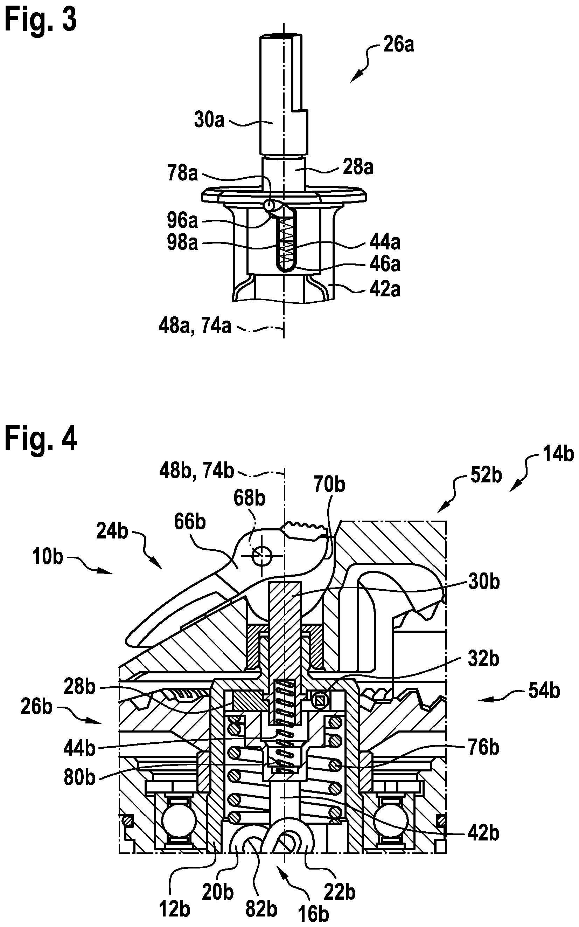

Die Entkopplungseinheit 26a weist zumindest ein Verbindungselement 78a auf, das dazu vorgesehen ist, das Entkopplungselement 28a und das Übertragungselement 42a bewegungstechnisch miteinander zu verbinden, insbesondere zumindest in einem Zustand der Abtriebswelle 12a mit einer geringen Drehzahl oder in einem Stillstand der Abtriebswelle 12a. Das Verbindungselement 78a ist als Bolzen ausgebildet. Das Verbindungselement 78a ist am Entkopplungselement 28a angeordnet, insbesondere fixiert. Das Verbindungselement 78a ist zusammen mit dem Entkopplungselement 28a bewegbar. Das Verbindungselement 78a erstreckt sich in das Kulissenelement 46a der Entkopplungseinheit 26a (Figur 3). Das Kulissenelement 46a ist als Kulissenführungsbahn ausgebildet. Das Kulissenelement 46a ist am Übertragungselement 42a angeordnet, insbesondere einteilig mit dem Übertragungselement 42a ausgebildet. Bei einer Rotationsbewegung der Abtriebswelle 12a ist das Entkopplungselement 28a und das Verbindungselement 78a infolge einer Bremsung durch eine Betätigung des Betätigungselements 30a relativ zum Übertragungselement 42a drehbar, wobei das Verbindungselement 78a derart in dem als Kulissenführungsbahn ausgebildeten Kulissenelement 46a bewegbar ist, dass das Entkopplungselement 28a gegen eine Federkraft des Entkopplungsfederelements 44aa in eine Führungsausnehmung 80a des Übertragungselements 42a bewegbar ist. Eine Betätigung des Bedienelements 66a während einer Drehbewegung der Abtriebswelle 12a ist in eine Bewegung des Betätigungselements 30a und des Entkopplungselements 28a relativ zum Übertragungselement 42a überführbar. Eine Bewegung des Übertragungselements 42a infolge einer Einwirkung einer Bedienerkraft mittels der Bedieneinheit 24a zu einer Überführung des Spannelements 20a, 22a, insbesondere der Spannelemente 20a, 22a, ausgehend von der Spannposition in die Löseposition während einer Drehbewegung der Abtriebswelle 12a ist weitestgehend unterbindbar. Bei einer geringen Drehzahl der Abtriebswelle 12a oder bei einem Stillstand der Abtriebswelle 12a ist eine von dem Betätigungselement 30a auf das Entkopplungselement 28a wirkende Axialkraft mittels eines Zusammenwirkens des Verbindungselements 78a und dem als Kulissenführungsbahn ausgebildeten Kulissenelement 46a auf das Übertragungselement 42a übertragbar. Das Übertragungselement 42a ist mittels der Bedieneinheit 24a gegen eine Federkraft des Spannfederelements 76a bewegbar. Das Übertragungselement 42a ist dazu vorgesehen, das Spannelement 20a, 22a, insbesondere die Spannelemente 20a, 22a, ausgehend von der Spannposition in die Löseposition zu bewegen.

Figur 3 zeigt eine Detailansicht der Entkopplungseinheit 26a. Das Betätigungselement 30a ist in einem unbetätigten Zustand dargestellt. Das Entkopplungselement 28a ist in einem mittels des Entkopplungsfederelements 44a an dem Übertragungselement 42a anliegenden Zustand des Entkopplungselements 28a dargestellt. Bei einer Rotation der Abtriebswelle 12a zusammen mit dem Übertragungselement 42a und der Entkopplungseinheit 26a ist das Entkopplungselement 28a und das Übertragungselement 42a relativ zum Betätigungselement 30a drehbar. Bei einer Bewegung des Betätigungselements 30a infolge einer Einwirkung einer Bedienerkraft auf das Bedienelement 66a ist das Betätigungselement 30a an das Entkopplungselement 28a, das zusammen mit der Abtriebswelle 12a rotierend antreibbar ist, andrückbar. Bei einer Rotation des Entkopplungselements 28a zusammen mit der Abtriebswelle 12a ist eine Drehbewegung des Entkopplungselements 28a infolge einer Einwirkung einer Reibkraft von dem Betätigungselement 30a auf das Entkopplungselement 28a abbremsbar, insbesondere in Abhängigkeit von einer Drehzahl der Abtriebswelle 12a. Das Entkopplungselement 28a ist infolge eines Zusammenwirkens des Kulissenelements 46a und des Verbindungselements 78a relativ zum Übertragungselement 42a verdrehbar, insbesondere um die Rotationsachse 48a der Abtriebswelle 12a. Das Entkopplungselement 28a ist relativ zum Übertragungselement 42a und/oder relativ zur Abtriebswelle 12a um die Rotationsachse 48a bewegbar, insbesondere verdrehbar. Das Verbindungselement 78a ist ausgehend von einem quer zur Rotationsachse 48a verlaufenden Kulissenbahnabschnitt 96a des Kulissenelements 46a in einen weiteren Kulissenbahnabschnitt 98a des Kulissenelements 46a bewegbar, der zumindest im Wesentlichen parallel zur Rotationsachse 48a verläuft. Der Kulissenbahnabschnitt 96a des Kulissenelements 46a ist derart ausgebildet, dass eine Bewegung des Verbindungselements 78a entlang einer zumindest im Wesentlichen parallel zur Rotationsachse 48a verlaufenden Richtung innerhalb des quer zur Rotationsachse 48a verlaufenden Kulissenbahnabschnitts 96a des Kulissenelements 46a entlang einer Strecke von insbesondere mindestens 1 mm, bevorzugt von mindestens 2 mm und besonders bevorzugt von mehr als 1 mm und weniger als 10 mm ermöglichbar ist. Mittels dieser Ausgestaltung des Kulissenelements 46a kann vorteilhaft gewährleistet werden, dass bei einer Rotation der Abtriebswelle 12a mit einer hohen Drehzahl eine zuverlässige Überführung des Verbindungselements 78a in den weiteren Kulissenbahnabschnitt 98a des Kulissenelements 46a realisierbar ist.

Das Entkopplungselement 28a ist infolge einer Anordnung des Verbindungselements 78a in dem weiteren Kulissenbahnabschnitt 98a des Kulissenelements 46a in einer Entkopplungsposition des Entkopplungselements 28a angeordnet. Das Entkopplungselement 28a ist infolge einer Anordnung des Verbindungselements 78a in dem weiteren Kulissenbahnabschnitt 98a des Kulissenelements 46a gegen eine Federkraft des Entkopplungsfederelements 44a bewegbar. Das Entkopplungselement 28a ist infolge einer Einwirkung einer Bedienerkraft über das Betätigungselement 30a entlang der Rotationsachse 48a relativ zum Übertragungselement 42a und/oder relativ zur Abtriebswelle 12a bewegbar, insbesondere in die Führungsausnehmung 80a des Übertragungselements 42a zumindest teilweise hineinbewegbar. Das Übertragungselement 42a weist vorzugsweise auf einer dem Spannelement 20a, 22a, insbesondere den Spannelementen 20a, 22a, zugewandten Seite des Übertragungselements 42a eine Schmutzabführöffnung (hier nicht näher dargestellt) auf, mittels derer ein in der Führungsausnehmung 80a befindlicher Schmutz und/oder Abrieb aus der Führungsausnehmung 80a und/oder aus dem Kulissenelement 46a abführbar ist. Es kann vorteilhaft ein sicherer Betrieb der Entkopplungseinheit 26a ermöglicht werden.

Die Bedieneinheit 24a ist infolge einer Ermöglichung einer Relativbewegung des Entkopplungselements 28a und des Betätigungselements 30a entlang der Rotationsachse 48a relativ zum Übertragungselement 42a und/oder relativ zur Abtriebswelle 12a von der Spanneinheit 16a entkoppelt, insbesondere in Abhängigkeit von einer Drehzahl der Abtriebswelle 12a. Bei einer geringen Drehzahl der Abtriebswelle 12a, insbesondere bei einer geringen Drehzahl der Abtriebswelle 12a oder bei einem Stillstand der Abtriebswelle 12a und dem Übertragungselement 42a ist eine Relativbewegung des Entkopplungselements 28a um die Rotationsachse 48a infolge einer Reibkraft zwischen dem Betätigungselement 30a und dem Entkopplungselement 28a weitestgehend unterbindbar, so dass das Verbindungselement 78a in dem Kulissenbahnabschnitt 96a des Kulissenelements 46a angeordnet ist und eine Einwirkung einer Bedienerkraft über das Betätigungselement 30a von dem Entkopplungselement 28a an das Übertragungselement 42a übertragbar ist. Die Bedieneinheit 24a ist mit der Spanneinheit 16a gekoppelt. Das Spannelement 20a, 22a, insbesondere die Spannelemente 20a, 22a, sind mittels der Bedieneinheit 24a in die Löseposition bewegbar.

Das Spannelement 20a, 22a, insbesondere die Spannelemente 20a, 22a, ist/sind beweglich, insbesondere schwenkbar an der Abtriebswelle 12a, insbesondere in der Abtriebswelle 12a, gelagert. Die Schwenkachse 62a des Spannelements 20a, 22a, insbesondere der Spannelemente 20a, 22a, verläuft vorzugsweise zumindest im Wesentlichen senkrecht zur Spannachse 74a der Spanneinheit 16a. Das Spannelement 20a, 22a, insbesondere die Spannelemente 20a, 22a, weist/weisen zumindest ein Bewegungskulissenelement 82a auf, das dazu vorgesehen ist, mit einem Kulisseneingriffselement 84a der Spanneinheit 16a zusammenzuwirken. Das Kulisseneingriffselement 84a ist am Übertragungselement 42a fixiert. Das Kulisseneingriffselement 84a ist als Bolzen ausgebildet, der an dem Übertragungselement 42a fixiert ist, insbesondere zwischen zwei Gabelenden des Übertragungselements 42a. Infolge eines Zusammenwirkens des Kulisseneingriffselements 84a und des Bewegungskulissenelements 82a ist/sind das Spannelement 20a, 22a, insbesondere die Spannelemente 20a, 22a, ausgehend von der Spannposition in die Löseposition bewegbar oder von der Löseposition in die Spannposition bewegbar. Das Spannelement 20a, 22a, insbesondere die Spannelemente 20a, 22a, ist/sind insbesondere mittels einer Einwirkung einer Federkraft des Spannfederelements 76a auf das Übertragungselement 42a ausgehend von der Löseposition in die Spannposition bewegbar. Das Spannelement 20a, 22a, insbesondere die Spannelemente 20a, 22a, ist/sind selbsttätig, insbesondere nach Wegnahme einer Einwirkung einer Bedienerkraft über die Bedieneinheit 24a, infolge einer Einwirkung einer Federkraft des Spannfederelements 76a in die Spannposition bewegbar.

Die Schnellspannvorrichtung 10a umfasst zumindest eine Sicherungseinheit 94a, insbesondere eine Selbsthemmungseinheit und/oder eine Rasteinheit, die dazu vorgesehen ist, zumindest bei einer Einwirkung einer von der Bedieneinheit 24a entkoppelten und in Richtung der Löseposition des Spannelements 20a, 22a, insbesondere der Spannelemente 20a, 22a, wirkenden Kraft auf das Spannelement 20a, 22a, insbesondere auf die Spannelemente 20a, 22a, eine Bewegung des Spannelements 20a, 22a, insbesondere der Spannelemente 20a, 22a, ausgehend von der Spannposition in die Löseposition des Spannelements 20a, 22a, insbesondere der Spannelemente 20a, 22a, zu unterbinden. Die Sicherungseinheit 94a weist zumindest ein beweglich gelagertes Form- und/oder Kraftschlusselement 86a, 88a, 90a, 92a auf, das zumindest in der Spannposition des Spannelements 20a, 22a, insbesondere der Spannelemente 20a, 22a, zu einer Sicherung des Spannelements 20a, 22a, insbesondere der Spannelemente 20a, 22a, gegen eine Bewegung in die Löseposition des Spannelements 20a, 22a, insbesondere der Spannelemente 20a, 22a, zumindest teilweise in das Spannelement 20a, 22a, insbesondere der Spannelemente 20a, 22a, und/oder in das mit dem Spannelement 20a, 22a, insbesondere mit den Spannelementen 20a, 22a, zusammenwirkende Übertragungselement 42a der Spanneinheit 16a eingreift. Eines der Form- und/oder Kraftschlusselemente 86a, 88a, 90a, 92a wird von dem Kulisseneingriffselement 84a gebildet (Figur 2).

Vorzugsweise ist in einer Spannposition des Spannelements 20a, 22a, insbesondere der Spannelemente 20a, 22a, mittels eines Zusammenwirkens des Bewegungskulissenelements 82a mit dem als Kulisseneingriffselement 84a ausgebildeten Form- und/oder Kraftschlusselement 86a bei einer Einwirkung einer von der Bedieneinheit 24a entkoppelten und in Richtung der Löseposition des Spannelements 20a, 22a, insbesondere der Spannelemente 20a, 22a, wirkenden Kraft auf das Spannelement 20a, 22a, insbesondere auf die Spannelemente 20a, 22a, eine zumindest im Wesentlichen senkrecht zur Rotationsachse 48a verlaufenden Hauptsicherungskraft auf das Spannelement 20a, 22a, insbesondere auf die Spannelemente 20a, 22a, ausübbar. Bevorzugt ist in einer Spannposition des Spannelements 20a, 22a, insbesondere der Spannelemente 20a, 22a, mittels eines Zusammenwirkens des Bewegungskulissenelements 82a mit dem als Kulisseneingriffselement 84a ausgebildeten Form- und/oder Kraftschlusselement 86a bei einer Einwirkung einer von der Bedieneinheit 24a entkoppelten und in Richtung der Löseposition des Spannelements 20a, 22a, insbesondere der Spannelemente 20a, 22a, wirkenden Kraft auf das Spannelement 20a, 22a, insbesondere auf die Spannelemente 20a, 22a, eine Bewegungsmöglichkeit des Spannelements 20a, 22a, insbesondere der Spannelemente 20a, 22a, in die Löseposition weitestgehend blockierbar.

Alternativ oder zusätzlich umfasst die Sicherungseinheit 94a zumindest ein weiteres Form- und/oder Kraftschlusselement 88a, 90a, das als Rastelement ausgebildet ist und das dazu vorgesehen ist, in das Spannelement 20a, 22a einzugreifen, insbesondere in der Spannposition des Spannelements 20a, 22a (Figur 2). Vorzugsweise umfasst die Sicherungseinheit 94a alternativ oder zusätzlich zumindest zwei als Rastelemente ausgebildete weitere Form- und/oder Kraftschlusselemente 88a, 90a, wobei jeweils eines in eins der Spannelemente 20a, 22a eingreift, insbesondere in der Spannposition der Spannelemente 20a, 22a. Die weiteren Form- und/oder Kraftschlusselemente 88a, 90a sind als beweglich gelagerte Rastelemente ausgebildet. Die weiteren Form- und/oder Kraftschlusselemente 88a, 90a sind entlang einer zumindest im Wesentlichen senkrecht zur Rotationsachse 48a und/oder zur Spannachse 74a verlaufenden Richtung beweglich, insbesondere translatorisch beweglich, gelagert. Die Rotationsachse 48a und die Spannachse 74a verlaufen vorzugsweise zumindest im Wesentlichen parallel, insbesondere koaxial, zueinander. Die Sicherungseinheit 94a umfasst vorzugsweise alternativ oder zusätzlich ein zusätzliches Form- und/oder Kraftschlusselemente 92a, das dazu vorgesehen ist, in das Übertragungselement 42a einzugreifen, insbesondere in einer Spannposition der Spannelemente 20a, 22a und/oder in einer mittels einer Federkraft des Spannfederelements 76a bewegten Endposition des Übertragungselements 42a. Das zusätzliche Form- und/oder Kraftschlusselement 92a ist als beweglich gelagertes Rastelement ausgebildet. Das zusätzliche Form- und/oder Kraftschlusselement 92a ist entlang einer zumindest im Wesentlichen senkrecht zur Rotationsachse 48a und/oder zur Spannachse 74a verlaufenden Richtung beweglich, insbesondere translatorisch beweglich, gelagert.

Die Entkopplungseinheit 26a weist zumindest ein Ausgabeelement 50a auf, das dazu vorgesehen ist, einem Bediener zumindest einen Funktionszustand der Entkopplungseinheit 26a auszugeben. Das Ausgabeelement 50a kann als mechanisches Element, als elektronisches Element oder als elektrisches Element ausgebildet sein. Vorzugsweise ist das Ausgabeelement 50a dazu vorgesehen, einem Bediener haptisch, akustisch und/oder optisch einen Funktionszustand der Entkopplungseinheit 26a auszugeben. Der Funktionszustand der Entkopplungseinheit 26a beschreibt vorzugsweise einen Zustand der Entkopplungseinheit 26a, wie beispielsweise einen gekoppelten oder entkoppelten der Bedieneinheit 24a von der Spanneinheit 16a, einen Defekt der Entkopplungseinheit 26a oder andere, einem Fachmann als sinnvoll erscheinende Zustände der Entkopplungseinheit 26a. Das Ausgabeelement 50a kann als Display, als einzelne Leuchtquelle, wie beispielswiese eine LED, als mechanisch bewegbares Anzeigeelement, als Lautsprecher o. dgl. ausgebildet sein. Ferner kann das Ausgabeelement 50a dazu vorgesehen sein, einem Bediener zumindest einen Funktionszustand der Sicherungseinheit 94a auszugeben.

In Figuren 4 bis 17 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figur 4 bis 17 ist der Buchstabe a durch die Buchstaben b bis n ersetzt.

Figur 4 zeigt eine Schnittansicht einer alternativen tragbaren Werkzeugmaschine 14b und einer alternativen Schnellspannvorrichtung 10b. Die in Figur 4 dargestellte tragbare Werkzeugmaschine 14b weist eine zu der in der Beschreibung zu den Figuren 1 bis 3 beschriebenen tragbaren Werkzeugmaschine 14a zumindest im Wesentlichen analoge Ausgestaltung auf. Die Schnellspannvorrichtung 10b für die zumindest eine rotierend antreibbare Abtriebswelle 12b aufweisende tragbare Werkzeugmaschine 14b umfasst zumindest eine Spanneinheit 16b, die zu einer werkzeuglosen Fixierung einer Einsatzwerkzeugeinheit (hier nicht näher dargestellt) an der Abtriebswelle 12b zumindest ein beweglich gelagertes Spannelement 20b, 22b, insbesondere zumindest zwei beweglich gelagerte Spannelemente 20b, 22b, zu einer Spannkrafteinwirkung auf die Einsatzwerkzeugeinheit in einer Spannposition des Spannelements 20b, 22b aufweist.

Ferner umfasst die Schnellspannvorrichtung 10b zumindest eine Bedieneinheit 24b zu einer Bewegung des Spannelements 20b, 22b in die Spannposition und/oder in eine Löseposition des Spannelements 20b, 22b, in der die Einsatzwerkzeugeinheit von der Spanneinheit 16b und/oder der Abtriebswelle 12b abnehmbar ist. Die Bedieneinheit 24b umfasst zumindest ein beweglich gelagertes Bedienelement (hier nicht näher dargestellt), das dazu vorgesehen ist, auf ein Betätigungselement 30b der Bedieneinheit 24b einzuwirken, um das Spannelement 20b ,22b in die Spannposition und/oder in eine Löseposition zu bewegen. Das Betätigungselement 30b ist drehfest mit der Abtriebswelle 12b verbunden und translatorisch beweglich in der Abtriebswelle 12b gelagert.

Des Weiteren umfasst die Schnellspannvorrichtung 10b zumindest eine Entkopplungseinheit 26b, die dazu vorgesehen ist, die Bedieneinheit 24b in Abhängigkeit von einer Drehzahl der Abtriebswelle 12b von der Spanneinheit 16b zu entkoppeln. Die Entkopplungseinheit 26b ist als Fliehkraftentkopplungseinheit ausgebildet. Die Entkopplungseinheit 26b umfasst zumindest ein beweglich gelagertes Entkopplungselement 28b, das in Abhängigkeit von einer Drehzahl der Abtriebswelle 12b gegen eine Federkraft zumindest eines Federelements 32b der Entkopplungseinheit 26b bewegbar ist. Das Entkopplungselement 28b ist vorzugsweise infolge einer Einwirkung einer durch die Rotation der Abtriebswelle 12b hervorrufbaren und auf das Entkopplungselement 28b einwirkbaren Fliehkraft um eine zumindest im Wesentlichen parallel zu einer Rotationsachse 48b der Abtriebswelle 12b verlaufenden Achse gegen eine Federkraft des Federelements 32b bewegbar.

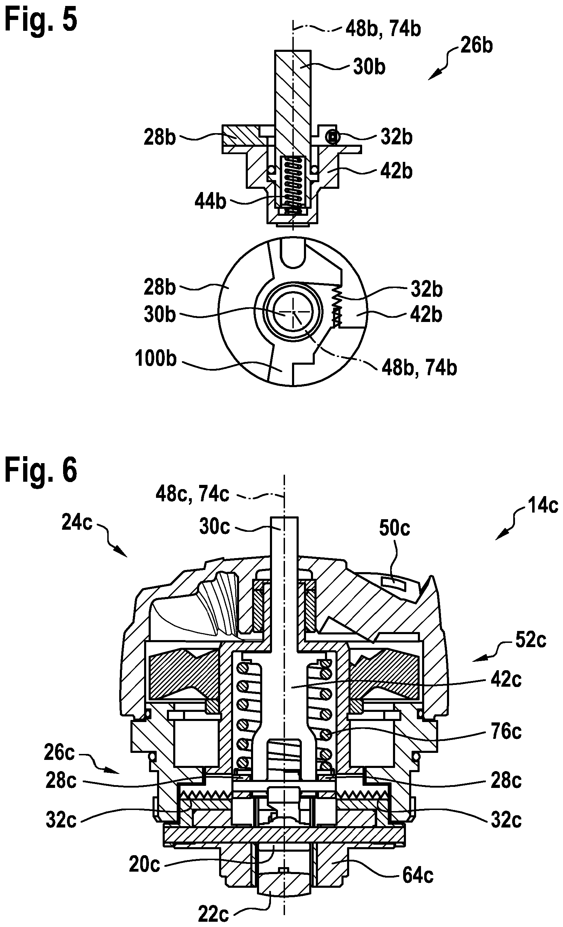

Figur 5 zeigt eine Detailansicht der Entkopplungseinheit 26b, die als Fliehkraftentkopplungseinheit ausgebildet ist, in einer Entkopplungsposition des Entkopplungselements 28b, wobei in einem oberen Bereich der Figur 5 eine Schnittansicht der Entkopplungseinheit 26b dargestellt ist und in einem unteren Bereich der Figur 5 eine Draufsicht der Entkopplungseinheit 26b dargestellt ist. Das Entkopplungselement 28b ist als Fliehkraftgewicht ausgebildet. Das Entkopplungselement 28b ist drehbar um eine zumindest im Wesentlichen parallel zur Rotationsachse 48b verlaufenden Achse relativ zu einem Übertragungselement 42b der Spanneinheit 16b am Übertragungselement 42b gelagert. Das Übertragungselement 42b ist drehfest mit der Abtriebswelle 12b verbunden. Mittels des Federelements 32b ist das Entkopplungselement 28b in eine Kopplungsposition des Entkopplungselements 28b mit einer Federkraft beaufschlagbar. Das Entkopplungselement 28b ist dazu vorgesehen, in Abhängigkeit von einer Drehzahl der Abtriebswelle 12b, insbesondere in Abhängigkeit von einer auf das Entkopplungselement 28b durch eine Rotation der Abtriebswelle 12b hervorrufbare Fliehkraft, eine Führungsausnehmung 80b des Übertragungselements 42b freizugeben, in die ein Betätigungselement 30b zumindest teilweise hinein bewegbar ist, insbesondere entgegen einer Federkraft eines Entkopplungsfederelements 44b der Entkopplungseinheit 26b. Das Betätigungselement 30b ist infolge einer Anordnung des Entkopplungselements 28b in der Entkopplungsposition des Entkopplungselements 28b gegen eine Federkraft des Entkopplungsfederelements 44b bewegbar. Das Betätigungselement 30b ist in der Entkopplungsposition des Entkopplungselements 28b infolge einer Einwirkung einer Bedienerkraft entlang der Rotationsachse 48b relativ zum Übertragungselement 42b und/oder relativ zur Abtriebswelle 12b bewegbar, insbesondere in die Führungsausnehmung 80b des Übertragungselements 42b zumindest teilweise hineinbewegbar. Das Entkopplungselement 28b umfasst einen Fortsatz 100b, an dem das Betätigungselement 30b in der Kopplungsposition des Entkopplungselements 28b, in der die Führungsausnehmung 80b des Übertragungselements 42b zumindest teilweise mittels des Entkopplungselements 28b verschlossen ist, anlegbar ist. In der Kopplungsposition ist eine auf das Betätigungselement 30b wirkende Betätigungskraft über das Entkopplungselement 28b an das Übertragungselement 42b übertragbar. Hinsichtlich weiterer Merkmale der in den Figuren 4 und 5 dargestellten Schnellspannvorrichtung 10b darf zumindest teilweise auf die Beschreibung der in den Figuren 1 bis 3 dargestellten Schnellspannvorrichtung 10a verwiesen werden.

Figur 6 zeigt eine Schnittansicht einer alternativen tragbaren Werkzeugmaschine 14c und einer alternativen Schnellspannvorrichtung 10c. Die in Figur 6 dargestellte tragbare Werkzeugmaschine 14c weist eine zu der in der Beschreibung zu den Figuren 1 bis 3 beschriebenen tragbaren Werkzeugmaschine 14a zumindest im Wesentlichen analoge Ausgestaltung auf. Die Schnellspannvorrichtung 10c für die zumindest eine rotierend antreibbare Abtriebswelle 12c aufweisende tragbare Werkzeugmaschine 14c umfasst zumindest eine Spanneinheit 16c, die zu einer werkzeuglosen Fixierung einer Einsatzwerkzeugeinheit (hier nicht näher dargestellt) an der Abtriebswelle 12c zumindest ein beweglich gelagertes Spannelement 20c, 22c, insbesondere zumindest zwei beweglich gelagerte Spannelemente 20c, 22c, zu einer Spannkrafteinwirkung auf die Einsatzwerkzeugeinheit in einer Spannposition des Spannelements 20c, 22c aufweist.

Ferner umfasst die Schnellspannvorrichtung 10c zumindest eine Bedieneinheit 24c zu einer Bewegung des Spannelements 20c, 22c in die Spannposition und/oder in eine Löseposition des Spannelements 20c, 22c, in der die Einsatzwerkzeugeinheit von der Spanneinheit 16c und/oder der Abtriebswelle 12c abnehmbar ist. Die Bedieneinheit 24c umfasst zumindest ein beweglich gelagertes Bedienelement (hier nicht näher dargestellt), das dazu vorgesehen ist, auf ein Betätigungselement 30c der Bedieneinheit 24c einzuwirken, um das Spannelement 20c ,22c in die Spannposition und/oder in eine Löseposition zu bewegen. Das Betätigungselement 30c ist drehfest mit der Abtriebswelle 12c verbunden und translatorisch beweglich in der Abtriebswelle 12c gelagert. Das Betätigungselement 30c ist insbesondere einteilig mit einem Übertragungselement 42c der Spanneinheit 16c ausgebildet. Es ist jedoch auch denkbar, dass das Betätigungselement 30c und/oder die Bedieneinheit 24c analog zu dem in den Figuren 1 bis 3 dargestellten Betätigungselement 30a und/oder zu der in den Figuren 1 bis 3 dargestellten Bedieneinheit 24a ausgebildet sind/ist.

Des Weiteren umfasst die Schnellspannvorrichtung 10c zumindest eine Entkopplungseinheit 26c, die dazu vorgesehen ist, die Bedieneinheit 24c in Abhängigkeit von einer Drehzahl der Abtriebswelle 12c von der Spanneinheit 16c zu entkoppeln. Die Entkopplungseinheit 26c ist als Fliehkraftentkopplungseinheit ausgebildet. Die Entkopplungseinheit 26c umfasst zumindest ein beweglich gelagertes Entkopplungselement 28c, das in Abhängigkeit von einer Drehzahl der Abtriebswelle 12c gegen eine Federkraft zumindest eines Federelements 32c der Entkopplungseinheit 26c bewegbar ist. Das Entkopplungselement 28c ist vorzugsweise infolge einer Einwirkung einer durch die Rotation der Abtriebswelle 12c hervorrufbaren und auf das Entkopplungselement 28c einwirkbaren Fliehkraft entlang einer zumindest im Wesentlichen senkrecht zu einer Rotationsachse 48c der Abtriebswelle 12c verlaufenden Richtung gegen eine Federkraft des Federelements 32c bewegbar. Vorzugsweise umfasst die Entkopplungseinheit 26c zumindest zwei Entkopplungselemente 28c, die in Abhängigkeit von einer Drehzahl der Abtriebswelle 12c jeweils gegen eine Federkraft zumindest eines Federelements 32c der Entkopplungseinheit 26c bewegbar sind. Vorzugsweise ist jedes der Entkopplungselemente 28c gegen eine Federkraft eines Federelements 32c der Entkopplungseinheit 26c bewegbar, das dem entsprechenden Entkopplungselement 28c zugeordnet ist. Es ist jedoch auch denkbar, dass die Entkopplungseinheit 26c eine von zwei abweichende Anzahl an Entkopplungselementen 28c aufweist. Das Entkopplungselement 28c ist entlang einer zumindest im Wesentlichen senkrecht zur Rotationsachse 48c der Abtriebswelle 12c verlaufenden Richtung beweglich, insbesondere translatorisch beweglich, gelagert. Infolge einer Bewegung des Entkopplungselements 28c entlang der zumindest im Wesentlichen senkrecht zur Rotationsachse 48c der Abtriebswelle 12c verlaufenden Richtung ist eine Bewegung des Betätigungselements 30c und/oder des Übertragungselements 42c entlang der Rotationsachse 48c sperrbar. Hinsichtlich weiterer Merkmale der in Figur 6 dargestellten Schnellspannvorrichtung 10c darf zumindest teilweise auf die Beschreibung der in den Figuren 1 bis 3 dargestellten Schnellspannvorrichtung 10a und/oder auf die in den Figuren 4 bis 6 dargestellte Schnellspannvorrichtung 10b verwiesen werden.

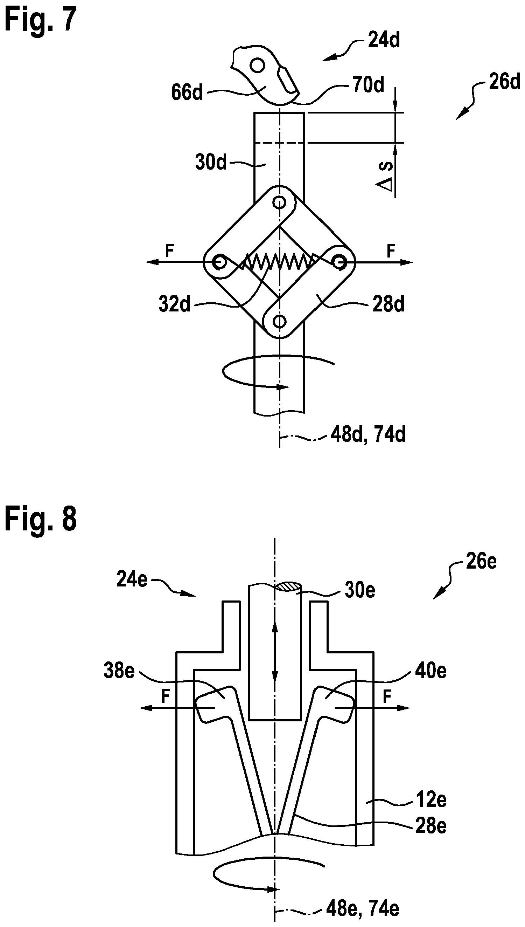

Figur 7 zeigt eine Detailansicht einer alternativen Entkopplungseinheit 26d. Die Entkopplungseinheit 26d ist als Fliehkraftentkopplungseinheit ausgebildet. Die Entkopplungseinheit 26d umfasst zumindest ein beweglich gelagertes Entkopplungselement 28d, das in Abhängigkeit von einer Drehzahl einer Abtriebswelle gegen eine Federkraft zumindest eines Federelements 32d der Entkopplungseinheit 26d bewegbar ist. Das Entkopplungselement 28d ist als Scherengelenkelement ausgebildet. Das Federelement 32d ist dazu vorgesehen, Schenkel des als Scherengelenkelement ausgebildeten Entkopplungselements 28d mit einer Federkraft zu beaufschlagen, die die Schenkel entlang einer zumindest im Wesentlichen senkrecht zu einer Rotationsachse 48d der Abtriebswelle verlaufenden Richtung aufeinander zu bewegt, insbesondere bei einer Aufhebung einer Fliehkraft. Ein Betätigungselement 30d der Bedieneinheit kann einteilig mit dem Entkopplungselement 28d ausgebildet sein. Hinsichtlich weiterer Merkmale der in Figur 7 dargestellten Entkopplungseinheit 26d darf zumindest teilweise auf die

Beschreibung der in den Figuren 1 bis 3 dargestellten Entkopplungseinheit 26a und/oder auf die in den Figuren 4 bis 6 dargestellten Entkopplungseinheit 26b, 26c verwiesen werden.

Figur 8 zeigt eine Detailansicht einer alternativen Entkopplungseinheit 26e. Die Entkopplungseinheit 26e ist als Fliehkraftentkopplungseinheit ausgebildet. Die Entkopplungseinheit 26e umfasst zumindest ein Entkopplungselement 28e, das einen beweglichen Kopplungsfortsatz 38e, 40e zu einer Verbindung mit einem Betätigungselement 30e der Bedieneinheit 24e in Abhängigkeit von einer Drehzahl der Abtriebswelle 12e aufweist. Das Entkopplungselement 28e umfasst vorzugsweise zumindest zwei Kopplungsfortsätze 38e, 40e, die infolge einer Fliehkraft relativ zueinander beweglich sind, insbesondere entlang einer zumindest im Wesentlichen senkrecht zu einer Rotationsachse 48e der Abtriebswelle 12e verlaufenden Richtung. Das Entkopplungselement 28e ist zumindest in einem Verbindungsbereich, in dem die Kopplungsfortsätze 38e, 40e miteinander verbunden sind, elastisch ausgebildet, insbesondere infolge einer geringen Materialstärke. Hinsichtlich weiterer Merkmale der in Figur 8 dargestellten Entkopplungseinheit 26e darf zumindest teilweise auf die Beschreibung der in den Figuren 1 bis 3 dargestellten Entkopplungseinheit 26a und/oder auf die in den Figuren 4 bis 7 dargestellten Entkopplungseinheit 26b, 26c, 26d verwiesen werden.

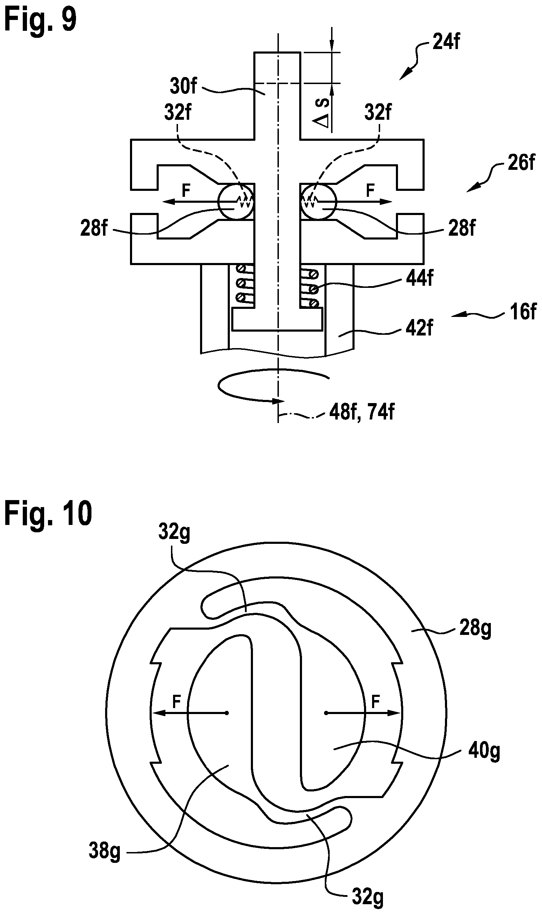

Figur 9 zeigt eine Detailansicht einer alternativen Entkopplungseinheit 26f. Die Entkopplungseinheit 26f ist als Fliehkraftentkopplungseinheit ausgebildet. Die Entkopplungseinheit 26f umfasst zumindest ein beweglich gelagertes Entkopplungselement 28f, das in Abhängigkeit von einer Drehzahl der Abtriebswelle gegen eine Federkraft zumindest eines Federelements 32f der Entkopplungseinheit 26f bewegbar ist, insbesondere entlang einer zumindest im Wesentlichen senkrecht zu einer Rotationsachse 48f einer Abtriebswelle verlaufenden Richtung. Vorzugsweise umfasst die Entkopplungseinheit 26f zumindest zwei relativ zueinander bewegbare Entkopplungselemente 28f. Die Entkopplungselemente 28f sind in einer Kopplungsposition der Entkopplungselemente 28f entlang einer zumindest im Wesentlichen parallel zur Rotationsachse 48f verlaufenden Richtung zwischen einem Betätigungselement 30f einer Bedieneinheit 24f und einem Übertragungselement 42f der Spanneinheit 16f angeordnet. Vorzugsweise liegen die Entkopplungselemente 28f in der Kopplungsposition der Entkopplungselemente 28f an dem Betätigungselement 30f und an dem Übertragungselement 42f an. Das Übertragungselement 42f und das Betätigungselement 30f sind zusammen entlang der Rotationsachse 48f bewegbar. Infolge einer Einwirkung einer Fliehkraft auf die Entkopplungselemente 28f sind die Entkopplungselemente 28f zwischen dem Betätigungselement 30f und dem Übertragungselement 42f, insbesondere entlang einer zumindest im Wesentlichen senkrecht zur Rotationsachse 48f verlaufenden Richtung, heraus bewegbar. Das Betätigungselement 30f ist gegen eine Federkraft eines Entkopplungsfederelements 44f der Entkopplungseinheit 26f relativ zum Übertragungselement 42f bewegbar. Hinsichtlich weiterer Merkmale der in Figur 9 dargestellten Entkopplungseinheit 26f darf zumindest teilweise auf die Beschreibung der in den Figuren 1 bis 3 dargestellten Entkopplungseinheit 26a und/oder auf die in den Figuren 4 bis 8 dargestellten Entkopplungseinheit 26b, 26c, 26d, 26e verwiesen werden.

Figur 10 zeigt eine spezielle Ausgestaltung eines Entkopplungselements 28g für eine Entkopplungseinheit 26f gemäß Figur 9. Das Entkopplungselement 28 umfasst zwei Kopplungsfortsätze 38g, 40g, die relativ zueinander bewegbar sind. Die Kopplungsfortsätze 38g, 40g sind infolge einer elastischen Verformung des Entkopplungselements 28g durch eine Einwirkung einer Fliehkraft auf das Entkopplungselement 28g relativ zueinander bewegbar. Hinsichtlich weiterer Merkmale der in Figur 10 dargestellten Entkopplungseinheit 26g darf zumindest teilweise auf die Beschreibung der in den Figuren 1 bis 3 dargestellten Entkopplungseinheit 26a und/oder auf die in den Figuren 4 bis 9 dargestellten Entkopplungseinheit 26b, 26c, 26d, 26e, 26f verwiesen werden.

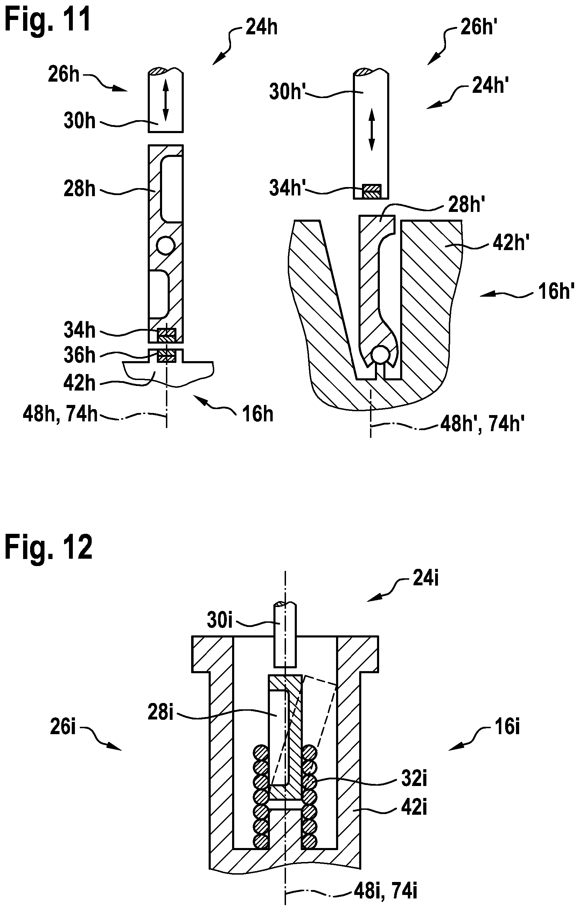

Figur 11 zeigt eine Detailansicht einer alternativen Entkopplungseinheit 26h, 26h'. Die Entkopplungseinheit 26h, 26h'ist als Fliehkraftentkopplungseinheit ausgebildet. Die Entkopplungseinheit 26h, 26h'umfasst zumindest ein beweglich, insbesondere drehbar gelagertes, Entkopplungselement 28h'. Eine Bewegungsachse des Entkopplungselements 28h' verläuft zumindest im Wesentlichen senkrecht zu einer Rotationsachse 48h einer Abtriebswelle. Die Entkopplungseinheit 26h, 26h' umfasst zumindest das beweglich gelagerte Entkopplungselement 28h, 28h', das in Abhängigkeit von einer Drehzahl der Abtriebswelle bewegbar ist, und zumindest ein Magnetelement 34h, 36h, 34h' zu einer Rückstellung des Entkopplungselements 28h, 28h' in eine Kopplungsposition des Entkopplungselements 28h, 28h'. Das Magnetelement 34h ist am Entkopplungselement 28h fixiert, insbesondere einteilig mit dem Entkopplungselement 28h ausgebildet. Ein weiteres Magnetelement 36h der Entkopplungseinheit 26h ist an einem Übertragungselement 42h einer Spanneinheit 16h angeordnet. Es ist jedoch auch denkbar, dass das Magnetelement 34h' an einem Betätigungselement 30h' einer Bedieneinheit 24h' angeordnet ist (vgl. linken Bereich der Figur 11). Hinsichtlich weiterer Merkmale der in Figur 11 dargestellten Entkopplungseinheit 26h, 26h' darf zumindest teilweise auf die Beschreibung der in den Figuren 1 bis 3 dargestellten Entkopplungseinheit 26a und/oder auf die in den Figuren 4 bis 10 dargestellten Entkopplungseinheit 26b, 26c, 26d, 26e, 26f, 26g verwiesen werden.

Figur 12 zeigt eine Detailansicht einer alternativen Entkopplungseinheit 26i. Die Entkopplungseinheit 26i ist als Fliehkraftentkopplungseinheit ausgebildet. Die Entkopplungseinheit 26i umfasst zumindest ein beweglich gelagertes Entkopplungselement 28i, das in Abhängigkeit von einer Drehzahl der Abtriebswelle gegen eine Federkraft zumindest eines Federelements 32i der Entkopplungseinheit 26i bewegbar ist. Das Entkopplungselement 28i ist in dem Federelement 32i angeordnet. Das Entkopplungselement 28i ist mittels des Federelements 32i beweglich gelagert. Hinsichtlich weiterer Merkmale der in Figur 12 dargestellten Entkopplungseinheit 26i darf zumindest teilweise auf die Beschreibung der in den Figuren 1 bis 3 dargestellten Entkopplungseinheit 26a und/oder auf die in den Figuren 4 bis 11 dargestellten Entkopplungseinheit 26b, 26c, 26d, 26e, 26f, 26g, 26h, 26h' verwiesen werden.

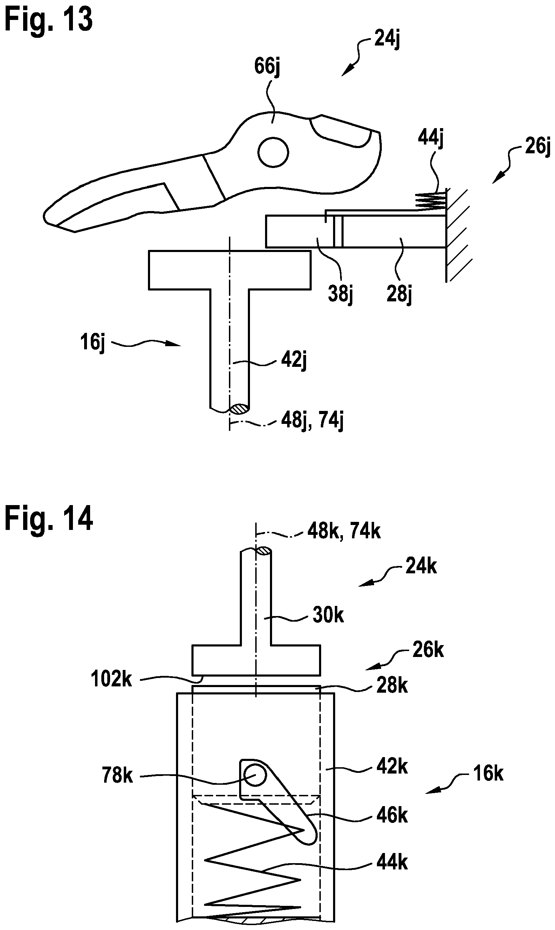

Figur 13 zeigt eine Detailansicht einer alternativen Entkopplungseinheit 26j. Die Entkopplungseinheit 26j ist als Reibungsentkopplungseinheit ausgebildet. Die Entkopplungseinheit 26j weist zumindest ein Entkopplungselement 28j auf, das einen beweglichen Kopplungsfortsatz 38j zu einer Verbindung mit einem Übertragungselement 42j der Spanneinheit 16j in Abhängigkeit von einer Drehzahl einer Abtriebswelle aufweist. Der Kopplungsfortsatz 38j ist relativ beweglich zu einem Grundkörper des Entkopplungselements 28j am Entkopplungselement 28j angeordnet und/oder gelagert, insbesondere mittels eines Gelenks, mittels eines elastischen Teilbereichs o. dgl. Eine Bewegungsachse des Kopplungsfortsatzes 38j verläuft zumindest im Wesentlichen parallel zu einer Rotationsachse 48j der Abtriebswelle. Die Entkopplungseinheit 26j weist zumindest ein Entkopplungsfederelement 44j auf, das den Kopplungsfortsatz 38j mit einer Federkraft beaufschlagt. Bei einer Einwirkung einer Reibkraft von einem rotierend antriebbaren Übertragungselement 42j einer Spanneinheit 16j auf den Kopplungsfortsatz 38j ist dieser relativ zum Grundkörper des Entkopplungselements 28j bewegbar. Ist eine Federkraft des Entkopplungsfederelements 44j größer als eine auf den Kopplungsfortsatz 38j wirkende Reibkraft ist der Kopplungsfortsatz 38j fluchtend zum Grundkörper des Entkopplungselements 28j ausgerichtet. Hinsichtlich weiterer Merkmale der in Figur 13 dargestellten Entkopplungseinheit 26j darf zumindest teilweise auf die Beschreibung der in den Figuren 1 bis 3 dargestellten Entkopplungseinheit 26a und/oder auf die in den Figuren 4 bis 12 dargestellten Entkopplungseinheit 26b, 26c, 26d, 26e, 26f, 26g, 26h, 26h', 26i verwiesen werden.

Figur 14 zeigt eine Detailansicht einer alternativen Entkopplungseinheit 26k. Die Entkopplungseinheit 26k ist als Reibungsentkopplungseinheit ausgebildet. Die Entkopplungseinheit 26k umfasst einen Reibbelag 102k, insbesondere einen Kupplungsreibbelag. Der Reibbelag 102k ist an einem Betätigungselement 30k einer Bedieneinheit 24k fixiert, insbesondere einteilig mit dem Betätigungselement 30k ausgebildet. Der Reibbelag 102k ist dazu vorgesehen, mit einem beweglich gelagerten Entkopplungselement 28k zusammenzuwirken. Hinsichtlich weiterer Merkmale der in Figur 14 dargestellten Entkopplungseinheit 26k darf zumindest teilweise auf die Beschreibung der in den Figuren 1 bis 3 dargestellten Entkopplungseinheit 26a und/oder auf die in den Figuren 4 bis 13 dargestellten Entkopplungseinheit 26b, 26c, 26d, 26e, 26f, 26g, 26h, 26h', 26i, 26j verwiesen werden.

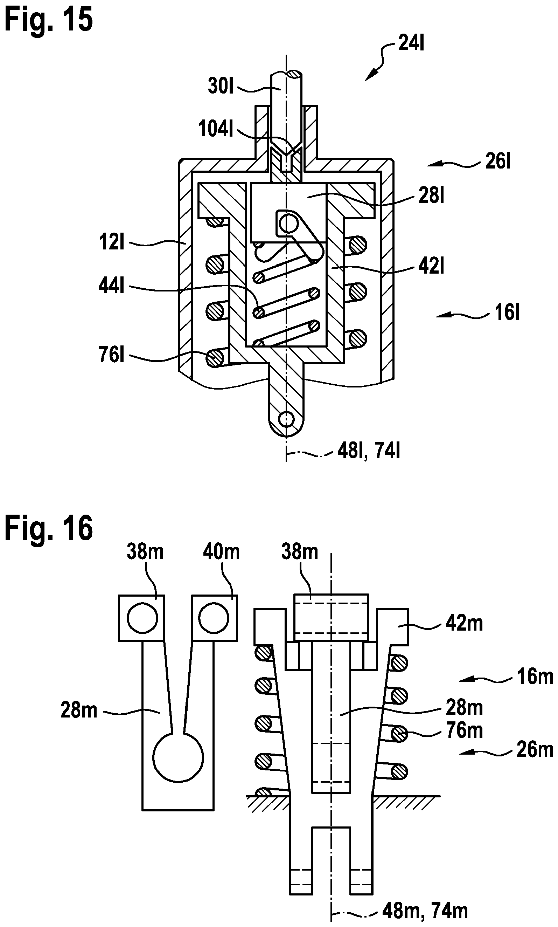

Figur 15 zeigt eine Detailansicht einer alternativen Entkopplungseinheit 261. Die Entkopplungseinheit 26l ist als Reibungsentkopplungseinheit ausgebildet. Die Entkopplungseinheit 26l umfasst zumindest ein Entkopplungselement 28l, das eine konisch verlaufende Reibpaarungsausnehmung 104l aufweist. Die Reibpaarungsausnehmung 104l ist dazu vorgesehen, mit einem konischen Verbindungsfortsatz eines Betätigungselements 30l einer Bedieneinheit 24l zusammenzuwirken. Hinsichtlich weiterer Merkmale der in Figur 15 dargestellten Entkopplungseinheit 26l darf zumindest teilweise auf die Beschreibung der in den Figuren 1 bis 3 dargestellten Entkopplungseinheit 26a und/oder auf die in den Figuren 4 bis 14 dargestellten Entkopplungseinheit 26b, 26c, 26d, 26e, 26f, 26g, 26h, 26h', 26i, 26j, 26k verwiesen werden.

Figur 16 zeigt eine Detailansicht einer alternativen Entkopplungseinheit 26m. Die Entkopplungseinheit 26m ist als Fliehkraftentkopplungseinheit ausgebildet. Die Entkopplungseinheit 26m umfasst zumindest ein Entkopplungselement 28m, das einen beweglichen Kopplungsfortsatz 38m, 40m zu einer Verbindung mit einem Betätigungselement 30m der Bedieneinheit 24m in Abhängigkeit von einer Drehzahl der Abtriebswelle 12m aufweist. Das Entkopplungselement 28m umfasst vorzugsweise zumindest zwei Kopplungsfortsätze 38m, 40m, die infolge einer Fliehkraft relativ zueinander beweglich sind, insbesondere entlang einer zumindest im Wesentlichen senkrecht zu einer Rotationsachse 48m der Abtriebswelle 12m verlaufenden Richtung. Das Entkopplungselement 28m ist zumindest in einem Verbindungsbereich, in dem die Kopplungsfortsätze 38m, 40m miteinander verbunden sind, elastisch ausgebildet, insbesondere infolge einer geringen Materialstärke. Das Entkopplungselement 28m ist in einem Übertragungselement 42m einer Spanneinheit 16m angeordnet. Hinsichtlich weiterer Merkmale der in Figur 16 dargestellten Entkopplungseinheit 26m darf zumindest teilweise auf die Beschreibung der in den Figuren 1 bis 3 dargestellten Entkopplungseinheit 26a und/oder auf die in den Figuren 4 bis 15 dargestellten Entkopplungseinheit 26b, 26c, 26d, 26e, 26f, 26g, 26h, 26h', 26i, 26j, 26k, 26l verwiesen werden.

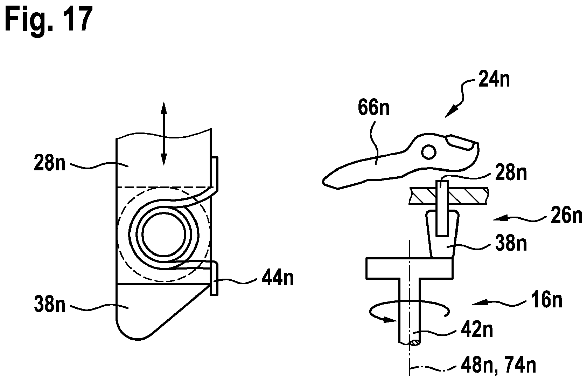

Figur 17 zeigt eine Detailansicht einer alternativen Entkopplungseinheit 26n. Die Entkopplungseinheit 26n ist als Reibungsentkopplungseinheit ausgebildet. Die Entkopplungseinheit 26n weist zumindest ein Entkopplungselement 28n auf, das einen beweglichen Kopplungsfortsatz 38n zu einer Verbindung mit einem Übertragungselement 42n der Spanneinheit 16n in Abhängigkeit von einer Drehzahl einer Abtriebswelle aufweist. Der Kopplungsfortsatz 38n ist relativ beweglich zu einem Grundkörper des Entkopplungselements 28n am Entkopplungselement 28n gelagert. Eine Bewegungsachse des Kopplungsfortsatzes 38n verläuft zumindest im Wesentlichen senkrecht zu einer Rotationsachse 48n der Abtriebswelle. Die Entkopplungseinheit 26n weist zumindest ein Entkopplungsfederelement 44n auf das den Kopplungsfortsatz 38n mit einer Federkraft beaufschlagt. Bei einer Einwirkung einer Reibkraft von einem rotierend antriebbaren Übertragungselement 42n einer Spanneinheit 16n auf den Kopplungsfortsatz 38n ist dieser relativ zum Grundkörper des Entkopplungselements 28n bewegbar. Ist eine Federkraft des Entkopplungsfederelements 44n größer als eine auf den Kopplungsfortsatz 38n wirkende Reibkraft ist der Kopplungsfortsatz 38n fluchtend zum Grundkörper des Entkopplungselements 28n ausgerichtet. Hinsichtlich weiterer Merkmale der in Figur 17 dargestellten Entkopplungseinheit 26n darf zumindest teilweise auf die Beschreibung der in den Figuren 1 bis 3 dargestellten Entkopplungseinheit 26a und/oder auf die in den Figuren 4 bis 16 dargestellten Entkopplungseinheit 26b, 26c, 26d, 26e, 26f, 26g, 26h, 26h', 26i, 26j, 26k, 26l, 26m verwiesen werden.

## Patentansprüche

1. Schnellspannvorrichtung für eine zumindest eine rotierend antreibbare Abtriebswelle (12a; 12b; 12c; 12e; 12l) aufweisende tragbare Werkzeugmaschine, insbesondere Winkelschleifmaschine, mit zumindest einer Spanneinheit (16a; 16b; 16c; 16d; 16e; 16f; 16g; 16h; 16h'; 16i; 16j; 16k; 16l; 16m; 16n), die zu einer werkzeuglosen Fixierung einer Einsatzwerkzeugeinheit (18a) an der Abtriebswelle (12a; 12b; 12c; 12e; 12l) zumindest ein beweglich gelagertes Spannelement (20a, 22a; 20b, 22b; 20c, 22c) zu einer Spannkrafteinwirkung auf die Einsatzwerkzeugeinheit (18a) in einer Spannposition des Spannelements (20a, 22a; 20b, 22b; 20c, 22c) aufweist, und mit zumindest einer Bedieneinheit (24a; 24b; 24c; 24d; 24e; 24f; 24h; 24h'; 24i; 24j; 24k; 24l; 24n) zu einer Bewegung des Spannelements (20a, 22a; 20b, 22b; 20c, 22c) in die Spannposition und/oder in eine Löseposition des Spannelements (20a, 22a; 20b, 22b; 20c, 22c), in der die Einsatzwerkzeugeinheit (18a) von der Spanneinheit (16a; 16b; 16c; 16d; 16e; 16f; 16g; 16h; 16h'; 16i; 16j; 16k; 16l; 16m; 16n) abnehmbar ist, **gekennzeichnet durch** zumindest eine Entkopplungseinheit (26a; 26b; 26c; 26d; 26e; 26f; 26g; 26h; 26h'; 26i; 26j; 26k; 26l; 26m; 26n), die dazu vorgesehen ist, die Bedieneinheit (24a; 24b; 24c; 24d; 24e; 24f; 24h; 24h'; 24i; 24j; 24k; 24l; 24n) in Abhängigkeit von einer Drehzahl der Abtriebswelle (12a; 12b; 12c; 12e; 12l) von der Spanneinheit (16a; 16b; 16c; 16d; 16e; 16f; 16g; 16h; 16h'; 16i; 16j; 16k; 16l; 16m; 16n) zu entkoppeln.

2. Schnellspannvorrichtung nach Anspruch 1, **dadurch gekennzeichnet, dass** die Entkopplungseinheit (26a; 26b; 26c; 26d; 26e; 26f; 26g; 26h; 26h'; 26i; 26j; 26k; 26l; 26m; 26n) derart ausgebildet ist, dass in Abhängigkeit von einer Drehzahl der Abtriebswelle (12a; 12b; 12c; 12e; 121) eine Relativbewegung zwischen zumindest einem Entkopplungselement (28a; 28b; 28c; 28d; 28e; 28f; 28g; 28h; 28h'; 28i; 28j; 28k; 281; 28m; 28n) der Entkopplungseinheit (26a; 26b; 26c; 26d; 26e; 26f; 26g; 26h; 26h'; 26i; 26j; 26k; 261; 26m; 26n) und zumindest einem Betätigungselement (30a; 30b; 30c; 30d; 30e; 30f; 30h; 30h'; 30i; 30k; 30l) der Bedieneinheit (24a; 24b; 24c; 24d; 24e; 24f; 24h; 24h'; 24i; 24j; 24k; 24l; 24n) zu einer Entkopplung der Bedieneinheit (24a; 24b; 24c; 24d; 24e; 24f; 24h; 24h'; 24i; 24j; 24k; 24l; 24n) von der Spanneinheit (16a; 16b; 16c; 16d; 16e; 16f; 16g; 16h; 16h'; 16i; 16j; 16k; 16l; 16m; 16n) erfolgt.

3. Schnellspannvorrichtung nach einem der vorhergehenden Ansprüche, **dadurch gekennzeichnet, dass** die Entkopplungseinheit (26a; 26b; 26c; 26d; 26e; 26f; 26g; 26h; 26h'; 26i; 26j; 26k; 26l; 26m; 26n) zumindest ein beweglich gelagertes Entkopplungselement (28a; 28b; 28c; 28d; 28e; 28f; 28g; 28h; 28h'; 28i; 28j; 28k; 28l; 28m; 28n) aufweist, das in Abhängigkeit von einer Drehzahl der Abtriebswelle (12a; 12b; 12c; 12e; 12l) in eine Entkopplungsposition überführbar ist, in der die Bedieneinheit (24a; 24b; 24c; 24d; 24e; 24f; 24h; 24h'; 24i; 24j; 24k; 24l; 24n) von der Spanneinheit (16a; 16b; 16c; 16d; 16e; 16f; 16g; 16h; 16h'; 16i; 16j; 16k; 16l; 16m; 16n) entkoppelt ist.

4. Schnellspannvorrichtung nach einem der vorhergehenden Ansprüche, **dadurch gekennzeichnet, dass** die Entkopplungseinheit (26b; 26c; 26d; 26e; 26f; 26g; 26h; 26h'; 26i; 26m) als Fliehkraftentkopplungseinheit ausgebildet ist.

5. Schnellspannvorrichtung nach Anspruch 4, **dadurch gekennzeichnet, dass** die Entkopplungseinheit (26b; 26c; 26d; 26e; 26f; 26g; 26h; 26h'; 26i; 26m) zumindest ein beweglich gelagertes Entkopplungselement (28b; 28c; 28d; 28e; 28f; 28g; 28h; 28h'; 28i; 28m) aufweist, das in Abhängigkeit von einer Drehzahl der Abtriebswelle (12b; 12c; 12e) gegen eine Federkraft zumindest eines Federelements (32b; 32c; 32d; 32e; 32f; 32g; 32h; 32h'; 32i; 32m) der Entkopplungseinheit (26b; 26c; 26d; 26e; 26f; 26g; 26h; 26h'; 26i; 26m) bewegbar ist.

6. Schnellspannvorrichtung zumindest nach Anspruch 4, **dadurch gekennzeichnet, dass** die Entkopplungseinheit (26h; 26h') zumindest ein beweglich gelagertes Entkopplungselement (28h; 28h'), das in Abhängigkeit von einer Drehzahl der Abtriebswelle bewegbar ist, und zumindest ein Magnetelement (34h, 36h; 34h') zu einer Rückstellung des Entkopplungselements (28h; 28h') in eine Kopplungsposition des Entkopplungselements (28h; 28h') umfasst.

7. Schnellspannvorrichtung zumindest nach Anspruch 4, **dadurch gekennzeichnet, dass** die Entkopplungseinheit (26e; 26g; 26j; 26m; 26n) zumindest ein Entkopplungselement (28e; 28g; 28j; 28m; 28n) aufweist, das einen beweglichen Kopplungsfortsatz (38e, 40e; 38g, 40g; 38j; 38m, 40m; 38n) zu einer Verbindung mit einem Betätigungselement (30e) der Bedieneinheit und/oder einem Übertragungselement (42g; 42j; 42m; 42n) der Spanneinheit (16e; 16g; 16j; 16m; 16n) in Abhängigkeit von einer Drehzahl der Abtriebswelle (12e) aufweist.

8. Schnellspannvorrichtung nach einem der Ansprüche 1 bis 3, **dadurch gekennzeichnet, dass** die Entkopplungseinheit (26a; 26j; 26k; 26l; 26n) als Reibungsentkopplungseinheit ausgebildet ist.

9. Schnellspannvorrichtung nach Anspruch 8, **dadurch gekennzeichnet, dass** die Entkopplungseinheit (26a; 26k; 26l) zumindest ein beweglich gelagertes Entkopplungselement (28a; 28k; 28l) aufweist, das infolge einer Reibkraft zwischen dem Entkopplungselement (28a; 28k; 28l) und einem Betätigungselement (30a; 30k; 30l) der Bedieneinheit (24a; 24k; 24l) relativ zur Abtriebswelle (12a; 12l) bewegbar ist.

10. Schnellspannvorrichtung nach Anspruch 8 oder 9, **dadurch gekennzeichnet, dass** die Entkopplungseinheit (26a; 26k; 26l) zumindest ein beweglich gelagertes Entkopplungselement (28a; 28k; 28l) und zumindest ein Entkopplungsfederelement (44a; 44k; 44l) umfasst, das das Entkopplungselement (28a; 28k; 28l) mit einer Federkraft in Richtung der Bedieneinheit (24a; 24k; 24l) beaufschlagt.

11. Schnellspannvorrichtung nach einem der Ansprüche 8 bis 10, **dadurch gekennzeichnet, dass** die Entkopplungseinheit (26a; 26k; 26l) zumindest ein beweglich gelagertes Entkopplungselement (28a; 28k; 28l) und zumindest ein Kulissenelement (46a; 46k; 46l) zu einer Führung des Entkopplungselements (28a; 28k; 28l) bei einer Relativbewegung des Entkopplungselements (28a; 28k; 28l) relativ zur Abtriebswelle (12a; 12l) aufweist.

12. Schnellspannvorrichtung nach einem der Ansprüche 8 bis 11, **dadurch gekennzeichnet, dass** die Entkopplungseinheit (26a; 26k; 26l) zumindest ein beweglich gelagertes Entkopplungselement (28a; 28k; 28l) aufweist, das entlang einer und/oder um eine Rotationsachse (48a; 48k; 48l) der Abtriebswelle (12a; 12l) in der Abtriebswelle (12a; 12l) beweglich gelagert ist.

13. Schnellspannvorrichtung nach einem der vorhergehenden Ansprüche, **dadurch gekennzeichnet, dass** die Entkopplungseinheit (26a; 26b; 26c) zumindest ein Ausgabeelement (50a; 50b; 50c) aufweist, das dazu vorgesehen ist, einem Bediener zumindest einen Funktionszustand der Entkopplungseinheit (26a; 26b; 26c) auszugeben.

14. Tragbare Werkzeugmaschine, insbesondere Winkelschleifmaschine, mit einer Schnellspannvorrichtung nach einem der vorhergehenden Ansprüche.

## Claims

1. Quick clamping device for a portable power tool, in particular angle grinder, which has at least one output shaft (12a; 12b; 12c; 12e; 12l) which can be driven in rotation, having at least one clamping unit (16a; 16b; 16c; 16d; 16e; 16f; 16g; 16h; 16h'; 16i; 16j; 16k; 16l; 16m; 16n) which, for tool-free fixing of an insert tool unit (18a) to the output shaft (12a; 12b; 12c; 12e; 121), has at least one movably mounted clamping element (20a, 22a; 20b, 22b; 20c, 22c) for exertion of a clamping force on the insert tool unit (18a) in a clamping position of the clamping element (20a, 22a; 20b, 22b; 20c, 22c), and having at least one operator control unit (24a; 24b; 24c; 24d; 24e; 24f; 24h; 24h'; 24i; 24j; 24k; 24l; 24n) for moving the clamping element (20a, 22a; 20b, 22b; 20c, 22c) into the clamping position and/or into a release position of the clamping element (20a, 22a; 20b, 22b; 20c, 22c), in which the insert tool unit (18a) can be removed from the clamping unit (16a; 16b; 16c; 16d; 16e; 16f; 16g; 16h; 16h'; 16i; 16j; 16k; 16l; 16m; 16n), **characterized by** at least one decoupling unit (26a; 26b; 26c; 26d; 26e; 26f; 26g; 26h; 26h'; 26i; 26j; 26k; 261; 26m; 26n) which is provided for decoupling the operator control unit (24a; 24b; 24c; 24d; 24e; 24f; 24h; 24h'; 24i; 24j; 24k; 24l; 24n) from the clamping unit (16a; 16b; 16c; 16d; 16e; 16f; 16g; 16h; 16h'; 16i; 16j; 16k; 16l; 16m; 16n) in a manner dependent on a rotational speed of the output shaft (12a; 12b; 12c; 12e; 121).

2. Quick clamping device according to Claim 1, **characterized in that** the decoupling unit (26a; 26b; 26c; 26d; 26e; 26f; 26g; 26h; 26h'; 26i; 26j; 26k; 261; 26m; 26n) is designed such that, in a manner dependent on a rotational speed of the output shaft (12a; 12b; 12c; 12e; 12l), a relative movement occurs between at least one decoupling element (28a; 28b; 28c; 28d; 28e; 28f; 28g; 28h; 28h'; 28i; 28j; 28k; 28l; 28m; 28n) of the decoupling unit (26a; 26b; 26c; 26d; 26e; 26f; 26g; 26h; 26h'; 26i; 26j; 26k; 26l; 26m; 26n) and at least one actuating element (30a; 30b; 30c; 30d; 30e; 30f; 30h; 30h'; 30i; 30k; 30l) of the operator control unit (24a; 24b; 24c; 24d; 24e; 24f; 24h; 24h'; 24i; 24j; 24k; 24l; 24n) for a decoupling of the operator control unit (24a; 24b; 24c; 24d; 24e; 24f; 24h; 24h'; 24i; 24j; 24k; 24l; 24n) from the clamping unit (16a; 16b; 16c; 16d; 16e; 16f; 16g; 16h; 16h'; 16i; 16j; 16k; 16l; 16m; 16n).

3. Quick clamping device according to any of the preceding claims, **characterized in that** the decoupling unit (26a; 26b; 26c; 26d; 26e; 26f; 26g; 26h; 26h'; 26i; 26j; 26k; 26l; 26m; 26n) has at least one movably mounted decoupling element (28a; 28b; 28c; 28d; 28e; 28f; 28g; 28h; 28h'; 28i; 28j; 28k; 28l; 28m; 28n) which, in a manner dependent on a rotational speed of the output shaft (12a; 12b; 12c; 12e; 12l), can be transferred into a decoupling position in which the operator control unit (24a; 24b; 24c; 24d; 24e; 24f; 24h; 24h'; 24i; 24j; 24k; 24l; 24n) is decoupled from the clamping unit (16a; 16b; 16c; 16d; 16e; 16f; 16g; 16h; 16h'; 16i; 16j; 16k; 16l; 16m; 16n).

4. Quick clamping device according to any of the preceding claims, **characterized in that** the decoupling unit (26b; 26c; 26d; 26e; 26f; 26g; 26h; 26h'; 26i; 26m) is designed as a centrifugal decoupling unit.

5. Quick clamping device according to Claim 4, **characterized in that** the decoupling unit (26b; 26c; 26d; 26e; 26f; 26g; 26h; 26h'; 26i; 26m) has at least one movably mounted decoupling element (28b; 28c; 28d; 28e; 28f; 28g; 28h; 28h'; 28i; 28m) which, in a manner dependent on a rotational speed of the output shaft (12b; 12c; 12e), is movable counter to a spring force of at least one spring element (32b; 32c; 32d; 32e; 32f; 32g; 32h; 32h'; 32i; 32m) of the decoupling unit (26b; 26c; 26d; 26e; 26f; 26g; 26h; 26h'; 26i; 26m).

6. Quick clamping device at least according to Claim 4, **characterized in that** the decoupling unit (26h; 26h') comprises at least one movably mounted decoupling element (28h; 28h'), which is movable in a manner dependent on a rotational speed of the output shaft, and at least one magnet element (34h, 36h; 34h') for a restoring movement of the decoupling element (28h; 28h') into a coupling position of the decoupling element (28h; 28h').

7. Quick clamping device at least according to Claim 4, **characterized in that** the decoupling unit (26e; 26g; 26j; 26m; 26n) has at least one decoupling element (28e; 28g; 28j; 28m; 28n) which has a movable coupling projection (38e, 40e; 38g, 40g; 38j; 38m, 40m; 38n) for a connection to an actuating element (30e) of the operator control unit and/or to a transmission element (42g; 42j; 42m; 42n) of the clamping unit (16e; 16g; 16j; 16m; 16n) in a manner dependent on a rotational speed of the output shaft (12e).

8. Quick clamping device according to any of Claims 1 to 3, **characterized in that** the decoupling unit (26a; 26j; 26k; 261; 26n) is designed as a friction-type decoupling unit.

9. Quick clamping device according to Claim 8, **characterized in that** the decoupling unit (26a; 26k; 26l) has at least one movably mounted decoupling element (28a; 28k; 28l) which is movable relative to the output shaft (12a; 12l) owing to a friction force between the decoupling element (28a; 28k; 28l) and an actuating element (30a; 30k; 30l) of the operator control unit (24a; 24k; 24l).

10. Quick clamping device according to Claim 8 or 9, **characterized in that** the decoupling unit (26a; 26k; 26l) comprises at least one movably mounted decoupling element (28a; 28k; 28l) and at least one decoupling spring element (44a; 44k; 44l) which acts on the decoupling element (28a; 28k; 28l) with a spring force in the direction of the operator control unit (24a; 24k; 241).

11. Quick clamping device according to any of Claims 8 to 10, **characterized in that** the decoupling unit (26a; 26k; 26l) has at least one movably mounted decoupling element (28a; 28k; 28l) and at least one slotted-guide element (46a; 46k; 46l) for guiding the decoupling element (28a; 28k; 28l) during a relative movement of the decoupling element (28a; 28k; 28l) with respect to the output shaft (12a; 12l) .

12. Quick clamping device according to any of Claims 8 to 11, **characterized in that** the decoupling unit (26a; 26k; 26l) has at least one movably mounted decoupling element (28a; 28k; 28l) which is mounted so as to be movable in the output shaft (12a; 12l) along and/or around an axis of rotation (48a; 48k; 48l) of the output shaft (12a; 12l).

13. Quick clamping device according to any of the preceding claims, **characterized in that** the decoupling unit (26a; 26b; 26c) has at least one output element (50a; 50b; 50c) which is provided for outputting at least a functional state of the decoupling unit (26a; 26b; 26c) to an operator.

14. Portable power tool, in particular angle grinder, having a quick clamping device according to any of the preceding claims.

## Revendications

1. Dispositif de serrage rapide pour une machine-outil portative, en particulier une meuleuse d'angle, dotée d'au moins un arbre de sortie (12a ; 12b ; 12c ; 12e ; 12l) susceptible d'être entraîné en rotation, comprenant au moins une unité de serrage (16a ; 16b ; 16c ; 16d ; 16e ; 16f ; 16g ; 16h ; 16h' ; 16i ; 16j ; 16k ; 16l ; 16m ; 16n) qui comprend, pour une fixation sans outil d'une unité d'outil d'insertion (18a) à l'arbre de sortie (12a ; 12b ; 12c ; 12e ; 12l), au moins un élément de serrage (20a, 22a ; 20b, 22b ; 20c, 22c) monté mobile pour une action de force de serrage sur l'unité d'outil d'insertion (18a) dans une position de serrage de l'élément de serrage (20a, 22a ; 20b, 22b ; 20c, 22c), et comprenant au moins une unité de commande (24a ; 24b ; 24c ; 24d ; 24e ; 24f ; 24h ; 24h' ; 24i ; 24j ; 24k ; 24l ; 24n) pour un déplacement de l'élément de serrage (20a, 22a ; 20b, 22b ; 20c, 22c) dans la position de serrage et/ou dans une position de libération de l'élément de serrage (20a, 22a ; 20b, 22b ; 20c, 22c), dans laquelle l'unité d'outil d'insertion (18a) peut être retirée de l'unité de serrage (16a ; 16b ; 16c ; 16d ; 16e ; 16f ; 16g ; 16h ; 16h' ; 16i ; 16j ; 16k ; 16l ; 16m ; 16n), **caractérisé par** au moins une unité de désaccouplement (26a ; 26b ; 26c ; 26d ; 26e ; 26f ; 26g ; 26h ; 26h' ; 26i ; 26j ; 26k ; 26l ; 26m ; 26n) qui est prévue pour désaccoupler l'unité de commande (24a ; 24b ; 24c ; 24d ; 24e ; 24f ; 24h ; 24h' ; 24i ; 24j ; 24k ; 24l ; 24n) de l'unité de serrage (16a ; 16b ; 16c ; 16d ; 16e ; 16f ; 16g ; 16h ; 16h' ; 16i ; 16j ; 16k ; 16l ; 16m ; 16n) en fonction d'une vitesse de rotation de l'arbre de sortie (12a ; 12b ; 12c ; 12e ; 121).

2. Dispositif de serrage rapide selon la revendication 1, **caractérisé en ce que** l'unité de désaccouplement (26a ; 26b ; 26c ; 26d ; 26e ; 26f ; 26g ; 26h ; 26h' ; 26i ; 26j ; 26k ; 26l ; 26m ; 26n) est réalisée de telle sorte qu'en fonction d'une vitesse de rotation de l'arbre de sortie (12a ; 12b ; 12c ; 12e ; 12l), un déplacement relatif s'effectue entre au moins un élément de désaccouplement (28a ; 28b ; 28c ; 28d ; 28e ; 28f ; 28g ; 28h ; 28h' ; 28i ; 28j ; 28k ; 28l ; 28m ; 28n) de l'unité de désaccouplement (26a ; 26b ; 26c ; 26d ; 26e ; 26f ; 26g ; 26h ; 26h' ; 26i ; 26j ; 26k ; 26l ; 26m ; 26n) et au moins un élément d'actionnement (30a ; 30b ; 30c ; 30d ; 30e ; 30f ; 30h ; 30h' ; 30i ; 30k ; 30l) de l'unité de commande (24a ; 24b ; 24c ; 24d ; 24e ; 24f ; 24h ; 24h' ; 24i ; 24j ; 24k ; 24l ; 24n) pour un désaccouplement de l'unité de commande (24a ; 24b ; 24c ; 24d ; 24e ; 24f ; 24h ; 24h' ; 24i ; 24j ; 24k ; 24l ; 24n) de l'unité de serrage (16a ; 16b ; 16c ; 16d ; 16e ; 16f ; 16g ; 16h ; 16h' ; 16i ; 16j ; 16k ; 16l ; 16m ; 16n) .

3. Dispositif de serrage rapide selon l'une des revendications précédentes, **caractérisé en ce que** l'unité de désaccouplement (26a ; 26b ; 26c ; 26d ; 26e ; 26f ; 26g ; 26h ; 26h' ; 26i ; 26j ; 26k ; 26l ; 26m ; 26n) présente au moins un élément de désaccouplement (28a ; 28b ; 28c ; 28d ; 28e ; 28f ; 28g ; 28h ; 28h' ; 28i ; 28j ; 28k ; 28l ; 28m ; 28n) monté mobile qui, en fonction d'une vitesse de rotation de l'arbre de sortie (12a ; 12b ; 12c ; 12e ; 12l), peut être transféré à une position de désaccouplement, dans laquelle l'unité de commande (24a ; 24b ; 24c ; 24d ; 24e ; 24f ; 24h ; 24h' ; 24i ; 24j ; 24k ; 24l ; 24n) est désaccouplée de l'unité de serrage (16a ; 16b ; 16c ; 16d ; 16e ; 16f ; 16g ; 16h ; 16h' ; 16i ; 16j ; 16k ; 16l ; 16m ; 16n).

4. Dispositif de serrage rapide selon l'une des revendications précédentes, **caractérisé en ce que** l'unité de désaccouplement (26b ; 26c ; 26d ; 26e ; 26f ; 26g ; 26h ; 26h' ; 26i ; 26m) est réalisée sous forme d'unité de désaccouplement à force centrifuge.

5. Dispositif de serrage rapide selon la revendication 4, **caractérisé en ce que** l'unité de désaccouplement (26b ; 26c ; 26d ; 26e ; 26f ; 26g ; 26h ; 26h' ; 26i ; 26m) présente au moins un élément de désaccouplement (28b ; 28c ; 28d ; 28e ; 28f ; 28g ; 28h ; 28h' ; 28i ; 28m) monté mobile qui, en fonction d'une vitesse de rotation de l'arbre de sortie (12b ; 12c ; 12e), est déplaçable à l'encontre d'une force de ressort d'au moins un élément ressort (32b ; 32c ; 32d ; 32e ; 32f ; 32g ; 32h ; 32h' ; 32i ; 32m) de l'unité de désaccouplement (26b ; 26c ; 26d ; 26e ; 26f ; 26g ; 26h ; 26h' ; 26i ; 26m).

6. Dispositif de serrage rapide au moins selon la revendication 4, **caractérisé en ce que** l'unité de désaccouplement (26h ; 26h') présente au moins un élément de désaccouplement (28h ; 28h') monté mobile qui est déplaçable en fonction d'une vitesse de rotation de l'arbre de sortie, et au moins un élément magnétique (34h, 36h ; 34h') pour un rappel de l'élément de désaccouplement (28h ; 28h') dans une position d'accouplement de l'élément de désaccouplement (28h ; 28h').

7. Dispositif de serrage rapide au moins selon la revendication 4, **caractérisé en ce que** l'unité de désaccouplement (26e ; 26g ; 26j ; 26m ; 26n) présente au moins un élément de désaccouplement (28e ; 28g ; 28j ; 28m ; 28n) qui présente une saillie d'accouplement (38e, 40e ; 38g, 40g ; 38j ; 38m, 40m ; 38n) mobile pour une liaison à un élément d'actionnement (30e) de l'unité de commande et/ou à un élément de transmission (42g ; 42j ; 42m ; 42n) de l'unité de serrage (16e ; 16g ; 16j ; 16m ; 16n) en fonction d'une vitesse de rotation de l'arbre de sortie (12e).

8. Dispositif de serrage rapide selon l'une des revendications 1 à 3, **caractérisé en ce que** l'unité de désaccouplement (26a ; 26j ; 26k ; 26l ; 26n) est réalisée sous forme d'unité de désaccouplement à friction.

9. Dispositif de serrage rapide selon la revendication 8, **caractérisé en ce que** l'unité de désaccouplement (26a ; 26k ; 26l) présente au moins un élément de désaccouplement (28a ; 28k ; 28l) monté mobile qui, en raison d'une force de friction entre l'élément de désaccouplement (28a ; 28k ; 28l) et un élément d'actionnement (30a ; 30k ; 30l) de l'unité de commande (24a ; 24k ; 24l), est déplaçable par rapport à l'arbre de sortie (12a ; 12l).

10. Dispositif de serrage rapide selon la revendication 8 ou 9, **caractérisé en ce que** l'unité de désaccouplement (26a ; 26k ; 26l) comprend au moins un élément de désaccouplement (28a ; 28k ; 28l) monté mobile et au moins un élément ressort de désaccouplement (44a ; 44k ; 44l) qui soumet l'élément de désaccouplement (28a ; 28k ; 28l) à une force de ressort en direction de l'unité de commande (24a ; 24k ; 24l).

11. Dispositif de serrage rapide selon l'une des revendications 8 à 10, **caractérisé en ce que** l'unité de désaccouplement (26a ; 26k ; 26l) présente au moins un élément de désaccouplement (28a ; 28k ; 28l) monté mobile et au moins un élément de coulisse (46a ; 46k ; 46l) pour un guidage de l'élément de désaccouplement (28a ; 28k ; 28l) dans le cas d'un déplacement relatif de l'élément de désaccouplement (28a ; 28k ; 28l) par rapport à l'arbre de sortie (12a ; 12l).

12. Dispositif de serrage rapide selon l'une des revendications 8 à 11, **caractérisé en ce que** l'unité de désaccouplement (26a ; 26k ; 26l) présente au moins un élément de désaccouplement (28a ; 28k ; 28l) monté mobile qui est monté mobile dans l'arbre de sortie (12a ; 12l) le long et/ou autour d'un axe de rotation (48a ; 48k ; 48l) de l'arbre de sortie (12a ; 121).

13. Dispositif de serrage rapide selon l'une des revendications précédentes, **caractérisé en ce que** l'unité de désaccouplement (26a ; 26b ; 26c) présente au moins un élément de sortie (50a ; 50b ; 50c) qui est prévu pour délivrer à un utilisateur au moins un état fonctionnel de l'unité de désaccouplement (26a ; 26b ; 26c).

14. Machine-outil portative, en particulier meuleuse d'angle, comprenant un dispositif de serrage rapide selon l'une des revendications précédentes.
